# EUROPEAN PATENT APPLICATION

(11) **EP 1 429 224 A1**
(43) Date of publication of application: **16.06.2004**
(21) Application number: 02293057.2
(22) Date of filing: 10.12.2002
(51) Int. Cl.: G06F 1/00

(54) **Firmware run-time authentication**

(71) Applicant: Texas Instruments Incorporated, Dallas, Texas 75251 (US); TEXAS INSTRUMENTS FRANCE, 06271 Villeneuve Loubet Cédex (FR)
(72) Inventor: Haidamous, Constantin, 93110 Rosny sous Bois (FR)
(74) Representative: Holt, Michael

(57) **Abstract**

A digital system is provided that has a hardware platform with a means for periodically checking the firmware integrity and authenticity during application run time, thus detecting any dynamic alteration of the external memory content. The platform includes means for binding the software module (code and data) to the hardware platform with the creation of a specific certificate, called a platform certificate, allowing its further authentication and integrity checking. The hardware platform is formed on a single integrated chip, and includes means for generating a unique Key Encryption Key (KEK) located on-chip. The platform includes means to identify a requester before entering a specific mode of the device (i.e:Test, Emulation...) without storing on-chip the corresponding requester's identity code. The platform is controled by a firmware code module. There is also provided means to create a certificate for the firmware code, signed by the trusted originator's asymmetrical private key of the firmware module (called MAN_PRI_KEY), the certificate containing information about the code it authenticates (size, storage address in memory, start address, signature), the public key of the trusted originator (called MAN_PUB_KEY), and also the platform configuration parameters to control clock frequency, memory accesses, test and emulation.

## Description

The foundation of a secure computing system is the certification of the firmware (resident software) installed on the hardware platform. This certification guarantees the origin and the integrity of the firmware and prevents software code from being modified by unauthorized entities. It also prevents the execution of any forged or spoofed code.

Typically, the certification of a software module is based on a certificate associated with this module. This certificate allows mainly authenticating the software module versus an originator and checking the code integrity.

This checking must be done not only at system boot, but also while the application is running, since the firmware can be easily altered, even when the system is active, with limited skills and low cost equipment.

The consequences of such a modification are either the direct disclosure of confidential data stored in the platform by altering the execution privileges, or the re-use of the platform with non-authorized software.

The solution offers a mean of periodically checking the firmware integrity and authenticity during application run time, thus detecting any dynamic alteration of the external memory content.

The firmware authentication and integrity checking is processed using on-chip inalterable resources only. These checks are activated upon an event generated from an on-chip hardware timer. The periodicity of the check is a parameter definitely configured at the device boot. Note that an optional implementation can authorize a certification check upon software request in addition to the fixed timed event.

Upon activation from the hardware timer, the certification integrity checker takes the control of the system activity. It is controlled via the internal processor executing program code fetched from an on-chip non-alterable memory. During the execution of the software routine, the processor cannot be interrupted nor deviated from its current task until execution is completed.

After completion of the routine execution, if the firmware is successfully tested, previous processing resumes from where it has been stopped. If the firmware certification checking failed, the processor initiates a system reset.

Current solutions for firmware certificate checking are activated upon system reset only, thus subsequently to the platform initialization phase. Any activation of the checking procedure leads to the re-initialization of the system and cannot be done on the flow preventing of any checking of the firmware during the active period of the system.

The proposed solution implements the firmware authentication and integrity checking on a periodical basis (optionally upon software request) while the system is active, thus detecting any "on the fly" firmware replacement by, for instance, physical memory devices substitution.

By managing the processor's state before and after executing the certificate checking process, the proposed solution allows for a quick execution without any need to re-initialize the platform.

The solution is flexible since the checking period as well as the size of the tested code can be tailored to fit the applications real-time requirements.

The solution is independent of any CMOS process (no needs for high cost technologie i.e: No-Vo) and can be easily adapted to any processor based IC at a minimum silicon cost.

Another aspect relates to a platform certificate. Even though the origin and the integrity of the software module are guaranteed, nothing prevents it from being copied and used without limitation on similar hardware platforms.

Thus, to prohibit unauthorized copy and the subsequent re-use of code and data, it is fundamental for the software module to be uniquely associated to the platform itself. This feature is required for copyright protection, digital right management and anti-cloning protection. This solution allows doing so.

The proposed solution is to bind the software module (code and data) to the hardware platform with the creation of a specific certificate, called a platform certificate, allowing its further authentication and integrity checking.

The binding is possible thanks to unique random value, generated form a random seed during device production and stored on-chip in a programmable Non Volatile storage mean.

This random value is the root of a key management system, which allows the binding of data to the hardware platform thanks to bulk encryption algorithms:
- The software module (code and data) [optional, used to preserve its confidentiality when stored in external non-volatile memory]
- The platform certificate, containing parameters of the software module (size, storage address in memory, start address, unique identifier of the application proprietary of the software module, signature, etc.) and secret key(s) associated to the software module.

This solution differs to other solutions to the same problem since it combines:
- Strong cryptosystems for platform certificate signature and verification (symmetrical cryptography, one-way hashes)
- Programmable on-chip non-volatile storage
- Protected and trusted software execution from on-chip non-volatile memory
- On-chip generation of random key

The binding of a software module to the platform with the creation of a specific platform certificate helps to uncover any modification of the original software module, and prevents any copy of the source from running on another similar platform, thus offering an efficient protection against cloning attacks, specifically important for copyright management and media protection.

The solution offers a high level of security since it is based on strong crypto algorithms (one-way hash, bulk encryption) for platform signature and verification. It is a flexible solution that can be easily adapted to the targeted computing hardware platform. It fits to the standard CMOS process (no need for high-cost technologies), it is efficient and cost effective. In addition, the use of a symmetric bulk encryption algorithm instead of asymmetric algorithm for the calculation of the signatures of the software module and of the platform certificate significantly reduces the CPU computing load.

The use of an on-chip unique and permanent key to encrypt the secret key(s) associated to the software module allows the secure external storage of these secret key(s) without requiring keeping them stored on-chip. It thus offers a flexible way to manage as many secret keys as required.

Another aspect relates to indirect data protection from random key encryption. The protection of confidential data when stored in external devices is usually based on symmetrical encryption from an on-chip secret key generated with this aim in view. The keeping of this secret key requires on-chip programmable Non Volatile storage means such as Flash or equivalent memory cells. The silicon technology necessary to integrate the necessary programmable NoVo memory elements requires additional process steps versus standard silicon process and thus leads to an overhead cost for IC fabrication.

The solution is based on a concept of a Key Encryption Key (KEK) built on-chip and unique. This key is used to encrypt the secret key specifically generated to encrypt the bulk data before external storage. Thus the secret key associated to the encrypted data can be itself stored externally without any on-chip NoVo storage means.
Moreover, this indirect data protection allows generating as much secret keys as necessary without increasing the on-chip storage needs.

The use of an on-chip unique and permanent key to encrypt the secret key(s) generated for the encryption of bulk data allows the external storage of these secret key(s) without requiring to keep them stored on-chip.

The possibility to externally store the secret keys thanks to their own encryption removes the need for any Non Volatile storage means on-chip thus authorizing to build the chip with a basic silicon process (saving of additional masks and process steps during fabrication).

Another aspect relates to a secure identification method for open access to protected resources in a processor. When using MPU based integrated circuits supporting secure application, it is mandatory to offer restricted accesses (visibility, controllability...) to the on-chip resources. However, engineering integrated circuits of high quality means running high fault coverage tests (structural & functional) and, in order to achieve the necessary coverage, the chip is generally configured in a test mode allowing to access to all blocks without any restrictions, thus bypassing all secure mechanisms.

Typically, the enabling of the test mode of the device is based on a secret identification procedure (specific entry sequence, key or password...). The identity information is then compared to reference data stored on-chip.

All known permanent storage means (ROM, eFuse, wired-logic...) can be tampered with physical non-destructive access, using limited skills and low cost equipment. The knowledge of the stored data is then giving the possibility to play the entry procedure and to put the device in "open" test mode thus giving access to the internal protected resources.

Fraud was already demonstrated by configuring a device in test mode to access the internal protected resources (i.e.: data or program code), to decode, to modify or even to extract the original code and then to reload the code into a similar device.

A solution to this aspect offers a means to identify a requester before entering a specific mode of the device (i.e:Test, Emulation...) without storing on-chip the corresponding requester's identity code.

The solution relies on the irreversible characteristic of the one-way hashing algorithm (e.g.: SHA1, MD5).

Entry in open test mode is controlled via the internal processor executing program code fetched from an on-chip ROM memory. During the execution, the sequential processing flow cannot be bypassed by any means (such as interrupts...) which are first deactivated.

From a identity code delivered by the requester (e.g: a 1024 bits identifier), the program computes the corresponding hashed value with a one-way hashing algorithm based either on an on-chip hardware cryptographic accelerator or on a software implementation of the algorithm. The resulting value is then compared to the reference hashed value of the identity code already stored in a non-alterable memory. If the comparison is good, the program configures the device in "open" test mode and then return in main CPU activity.

Hence, even if the reference hashed identity code value has been disclosed from the reading of the non-alterable memory content by any hardware or software means, the input data that must be supplied for the identification of the requester before enabling the test mode configuration of the device remains secret thanks to the irreversible characteritic of the one-way hashing algorithm.

The most frequent solutions used for sensitive product consists in:
1. permanently disabling, at manufacturing site, the test mode once the device has been tested (i.e: with smartcard, no possibility to running test afterwards).
2. integrate a ROM'ed Built In Self Test program (not flexible, increase ROM Size/Cost, on-field failure analysis impossible...).
3. use a "low level security" secret code stored on-chip (possible physical or software tampering)

The proposed solution provides a high security level mean to configure a device in an open test mode even after product delivery to customer; for instance entry in test mode to allowing fault coverage test upgrade without chip re-manufacturing (ROM masks level ... ), or entry in emulation mode to allowing software debugging process.

This solution is suited to a standard CMOS process (no needs for extra silicon process steps or additional silicon area) and can be easily adapted to any integrated processor without architectural impact.

Another aspect pertains to secure management of platform configuration parameters. Hardware integrated computing platforms require, during boot sequence, the dynamic management of configuration parameters to offer the flexibility for supporting different operating scenarios. These parameters can control internal clock frequencies, memory access wait-states, and emulation access rights, to name a few.

However, there is no way to prevent an attacker to corrupt the normal execution phase and to modify these platform configuration parameters. The consequences of such a modification are either the direct disclosure of confidential data stored in the platform (for example by enabling emulation), or the modification of the expected behavior of the platform (for example by changing the internal clock frequency or the memory access wait-states), which can lead to the alteration of execution privileges or data disclosure.

The proposed solution allows managing platform configuration parameters with a very high level of security.

The foundation of a secure computing platform is the authentication of the firmware installed on the platform. This authentication guarantees the origin and the integrity of the firmware, and prevents code from being modified by unauthorized entities. It also prevents the execution of any forged or spoofed firmware code. The authentication of a software module is based on a certificate associated with this module. This certificate allows mainly authenticating the software module versus a reference and checking the code integrity.

The proposed solution is to create a certificate for the firmware code, signed by the trusted originator's asymmetrical private key of the firmware module (called MAN_PRI_KEY). This certificate contains information about the code it authenticates (size, storage address in memory, start address, signature), the public key of the trusted originator (called MAN_PUB_KEY), and also the platform configuration parameters to control clock frequency, memory accesses, test and emulation enable among others.

Whatever the source of the device reset, and prior to any application processing, the platform always starts execution from protected on-chip ROM by running the secure boot code which authenticates and checks the integrity of the firmware certificate and of the firmware code downloaded in the external NoVo memory. If authentication and integrity checking are successful, the secure boot code configures the physical platform according to the parameters contained in the platform, and then starts the firmware code execution.

The only entity allowed to modify the firmware code and platform configuration parameters is the trusted originator of the firmware module. Indeed, the authentication of the certificate relies on the authentication of the originator's MAN_PUB_KEY included in the certificate versus the hashing of this MAN_PUB_KEY stored on-chip in a non-alterable memory location. If an attacker either generate and sign a new firmware certificate signed by its own asymmetrical private key, or modifies any fields in the firmware certificate or code, the authentication and integrity checking will fail, and the attack will be detected.

This solution differs to other solutions to the same problem since it combines:
- robust cryptosystems for certificate signature and verification (public key and one-way hash algorithms)
- Programmable on-chip non-alterable memory (ed. eFuse array)
- Protected and trusted software execution from on-chip non-volatile memory (ROM)

Let's take the example of debug management in secure devices: the most frequent solution is to permanently disable, during manufacturing, the emulation features once the device is tested. The proposed solution maintains the capability for an authorized actor to enable and disable during the life cycle of the device the emulation features, thanks to a dedicated platform configuration parameter. The debug capabilities are then not limited to the authorized actor, while keeping a high-level of security.

The solution offers a high level of security since it is based on robust crypto algorithms (one-way hash, public key encryption) for certificates signature and verification. It is a flexible solution that can be easily adapted to the targeted computing hardware platform. In addition, it fits to the standard CMOS process (no need for high-cost technologies), it is efficient and cost effective.

A detailed description of an implementation of a Secure Boot ROM will now be provided. The goal of the Secure Boot ROM is to apply an authentication and verification mechanisms on the external Firmware or on the downloaded FLASH Programmer before their execution on the device.

The Secure Boot ROM code is split with following features:
Synchronization on UARTs (Modem and SIR) to download FLASH programmer in Internal SRAM
Firmware certification and authentication before execution
Secure services to perform binding and unbinding
Services to perform engineering tests

**Note**: this specification is based on 1 asymmetrical public key per manufacturer, the hash of which is e-fused in the design

| Glossary | |
|---|---|
| PRRM | Protected Resources Reset Management |
| WS | Wait-State |

### BOOT Application

### Requirements

■ ROM code size is 48Kbytes
■ Use Internal RAM for code and data (independent of the external devices (WS, buffer size,...))
   ■ Data for ROM code application are located in upper 1.5Mbits and in Secure RAM to avoid conflict with PRRM module
   ■ First 4Mbits are reserved to download the FLASH Programmer after serial interface synchronisation
■ The Boot ROM must be able to remap the interrupt vector
■ The serial interface to download the FLASH Programmer are:
   ■ UART_MODEM1 and UART_MODEM2 configured in MODEM mode.
   ■ UART_IRDA configured in SIR mode
   ■ Automatic detection of UART module to use
■ Have a robust protocol for the FLASH programmer download
■ The FLASH Programmer is not dependant of the Secure Boot ROM code (except for the memory mapping)
■ The code will not be able to be patched by S/W or H/W.
■ The Secure Boot ROM is in charge to authenticate and check the integrity of either the Firmware located in external FLASH or the downloaded FLASH Programmer located in internal SRAM
■ The Secure Boot ROM is optimized in order to minimize the impact on the boot duration
■ Target (without RSA decryption): TBD

### Architecture of the ROM code

### High-level overview

The ROM code is split in several independent functions as described here below:
- Secure Boot Loader
   o Synchronization on UARTs
   o Firmware Authentication
   o FLASH Programmer download
      ■ FLASH Programmer Authentication
- Secure services to perform binding and unbinding
- Services to perform engineering tests
- Re-mapping of interrupt vectors

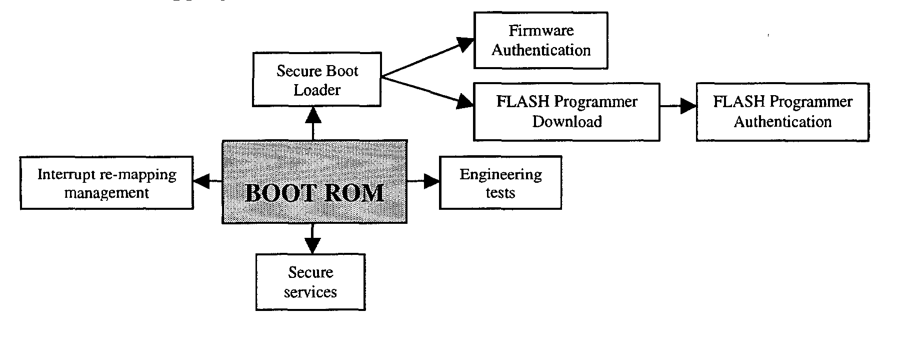

### Global boot sequence

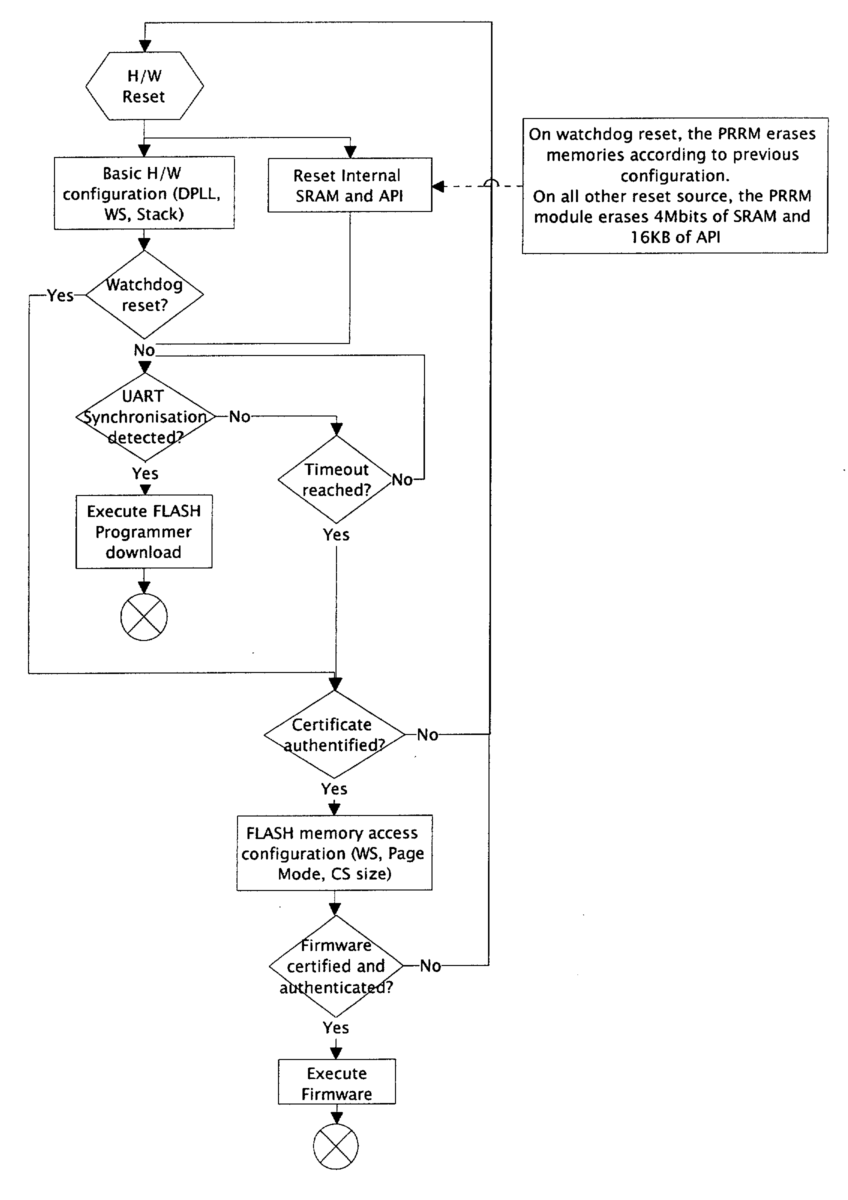

### Global Secure Boot sequence:

Whatever the source of the reset (Power-on reset, ON/OFF or watchdog reset), the mobile always starts the code execution in the Secure Boot ROM. This step can not be bypassed by any means and is the base of the security.

As soon as the first code execution, the Secure Boot ROM configure the DPLL and the ARM clock in order to have the best performance (see section 0). This optimal configuration allows to minimize the impact on the boot duration. The ARM clock frequency is provided from DPLL, which is configured at 52MHz. This configuration is independant of the input VTCXO frequency because an H/W module detects automatically the frequency and set accordingly a divider by 2 at the input of the DPLL module.

In parallel, the PRRM module erases the content of the Internal SRAM (first 4Mbits) and the API memory. This module uses directly the ARM clock, which is configured at 52MHz.

In order to avoid any conflict between ARM accesses and PRRM module, all data managed by the Secure Boot ROM are located in the upper 1.5Mbits of the Internal SRAM.

After optimal H/W configuration, the Secure Boot ROM checks the reset source. In case of watchdog reset (CNTL_RST[3] bit at '1'), the Secure Boot ROM bypasses the synchronisation on the serial interface in order to reduce the impact on the user. Moreover, on watchdog reset occurrence, the PRRM can be configured by the manufacturer in order to not reset the content of the Internal SRAM. For example, the configuration could be to set FULL_RST_EN bit to '0' and PRRM_INT_START and PRRM_INT_END bits to 0x0000 in the PRRM module (refer to document [4]).
The Secure Boot ROM does not reset the bit CNTL_RST[3], which lets the reset source information to the Firmware. Thanks to this mechanism, the manufacturer can put in place a fast recovery mechanism in order to not disturb the user.

In case of the reset source does not come from watchdog, the 3 UARTs are configured. UART_MODEM1/2 are configured in Modem mode, whereas UART_IRDA is configured in SIR mode. Only a SIR physical interface is supported, which includes pulse generation and frame wrapping.

A S/W timer is started and the Secure Boot ROM waits a synchronisation from an external PC. The serial interfaces are polled sequentially. The S/W timeout is fixed to 15ms, which allows to receive around:
15 signaling commands in Modem mode at 19200bps.
4 signaling commands in SIR mode at 19200bps.

In case of the timeout is reached, the Secure Boot ROM starts a sequence of authentication and integrity verification of the Firmware located in external FLASH. This Firmware must be located on the CS5, which is the greatest chip-select on hardware platform, and the certificate must be located at the first address of the CS5.
In case of success of the certificate authentication and integrity check, the Secure Boot ROM configures the external memory interface according to the parameters contained in the Firmware's certificate. This configuration is done in order to speed-up the authentication phase, which consists to hash the Firmware. The configurations are the Page Mode capability, the number of wait-state and dummy cycle to access the FLASH memory at 52MHz.
In case of success of the firwmare signature authentication and code integrity check, the Firmware is executed. The address of the entry point of the Firmware is located in the certificate.
In case of error of the certification or authentication verifications, the Secure Boot ROM performs a S/W reset in order to restart the boot sequence.

In case of a synchronisation on the serial interface is detected before to reach the timeout, the Secure Boot ROM enters in the sequence to download a FLASH Programmer. The download is done thanks to a specific protocol described elsewhere.

### Basic H/W configuration

### Clock configuration

The H/W is configured during the first step of the boot application in *bootloader.s* file:
- DPLL at 52MHz
- ARM uses DPLL
- RHEA Access Factor (TBD because should be 0 at reset):
   o 0 on strobe 0
   o 0 on strobe 1
- API wait state:
   o 0WS in HOM
   o 6WS in SAM
- CS5 configuration: un-changed at reset (but configured after Firmware Certificate authentication phase).
- Disable of Watchdog timer
Note:
- At reset, ARM interrupts are masked in the ARM CPSR register, then it is neither mandatory to configure CPSR, nor to mask interrupt in the Interrupt Handler module.
- At reset, CSI is configured with 0WS in 32-bits
- Before to release the ARM reset, the VTCXO frequency has been detected automatically in the Clock Manager module and VTCXO_DIV2 bit in CNTL_CLK register is set to the corresponding value. In consequence, the DPLL always receives a clock at 13MHz and the S/W does not need to manage it.

### Serial interface configuration

The serial interfaces used in the Secure BootLoader are:

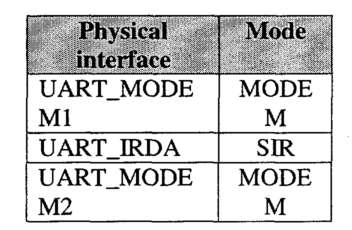

The UARTs are configured with the following default value:
- Baud rate: 19200 bps,
- 8 bits, no parity, 1 stop bit,

UART_MODEM1/2 are configured in MODEM mode.

UART_IRDA is configured in SIR mode with the following parameters:
- Pulse duration is 3/16^{th} of baud rate
- Frame Length method to send data
- TX Underrun is enabled
- SD_MODE pin is not managed
- XBOF type is 0xC0
- Number of additional XBOFs is 2

### Certificate detail

In order to minimize the impact on the CPU performances, the ROM code distinguishes two certificates, which have always a known size:
Firmware and FLASH Programmer certificate. For compatibility reasons with document [3], it will be called in the rest of this document Manufacturer certificate.
Platform certificate (used for binding/unbinding services)

The definition of the certificates is based on the document [3]. Nevertheless, some additional parameters have been added for customization of the platform and some modifications have been done in order to reduce the size of the certificate.
Manufacturer certificate
Manufacturer certificate is used both by the FLASH Programmer and the Firmware in order to certify and check the integrity of the program before any execution.

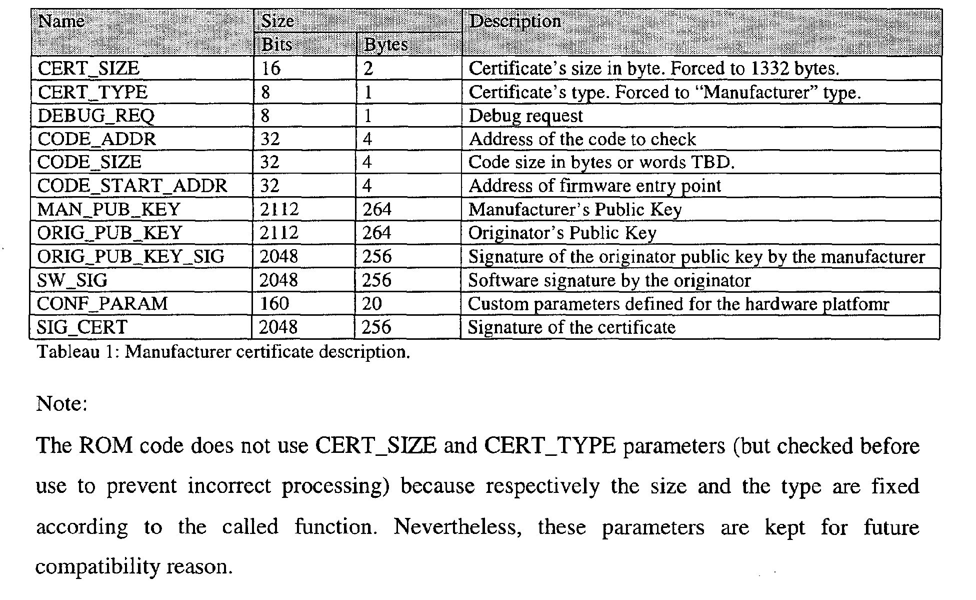

Some parameters do not require to be defined on 16-bits, but to be compliant with last C compiler constraints (data alignment in structure), they are forced to 16-bits.
The Manufacturer certificate corresponding to the Firmware must be located at the first address of the CS5 (0600:0000), even if this configuration is not kept during run-time.

The start address of the code to check must be word aligned (32-bits).

### RSA key parameters:

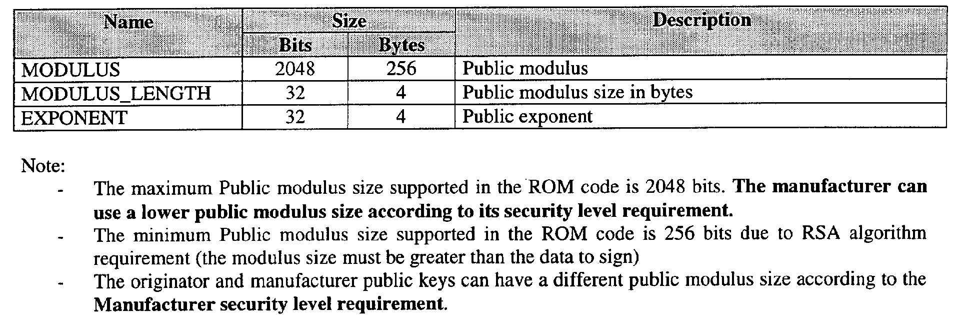

### Configuration parameters:

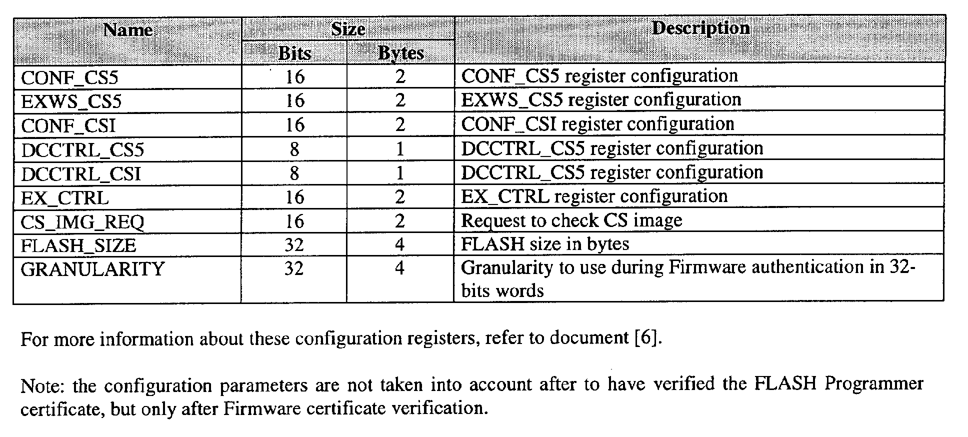

### Granularity explanation:

The goal of the Granularity parameter is to check the full memory range containing the Firmware without to impact the duration of the hashing processing and without to decrease the security level.

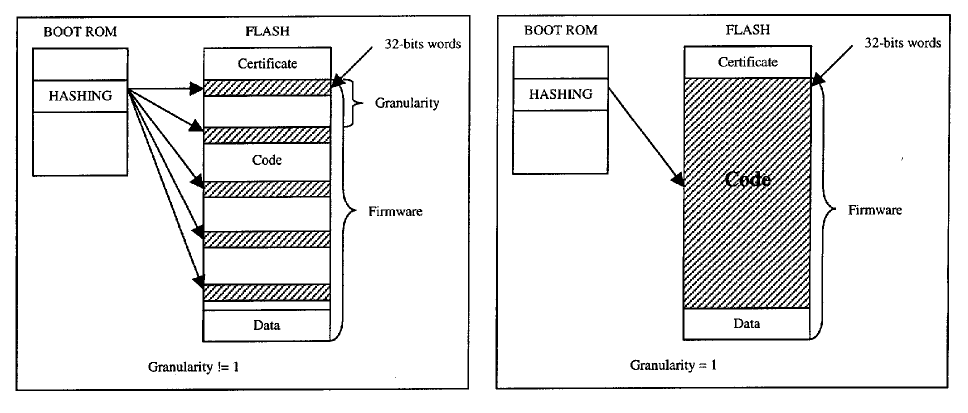

### CS image check explanation:

### Hypothesis:

The hacker has copied externally the FLASH on a greater one and has inserted a virus in the upper area.
For example, the original FLASH size is 2Mbytes, but the chip select size is 4Mbytes. Then, the hacker can force ADD[21] bit to '1' in order to access the second 2Mbytes instead of the first one as soon as the authentication phase is finished. This modification is possible due to physical memory duplication when the chip-select is greater than the memory size.

### Solution:

The solution consists to authenticate the Firmware and the Firmware image located in FLASH image in the chip-select. The secure boot loader performs this authentication according to parameters located in the certificate (FLASH size, CS size configuration, Code size to check and image check enable). Thanks to this method, the hacker will not be able to execute his software.

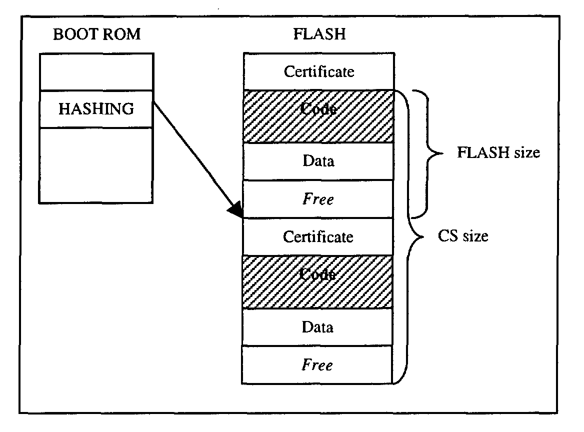

### Platform certificate

Platform certificate is used by secure services (binding/unbinding) to create a certificate according to the platform thanks to KEK value.

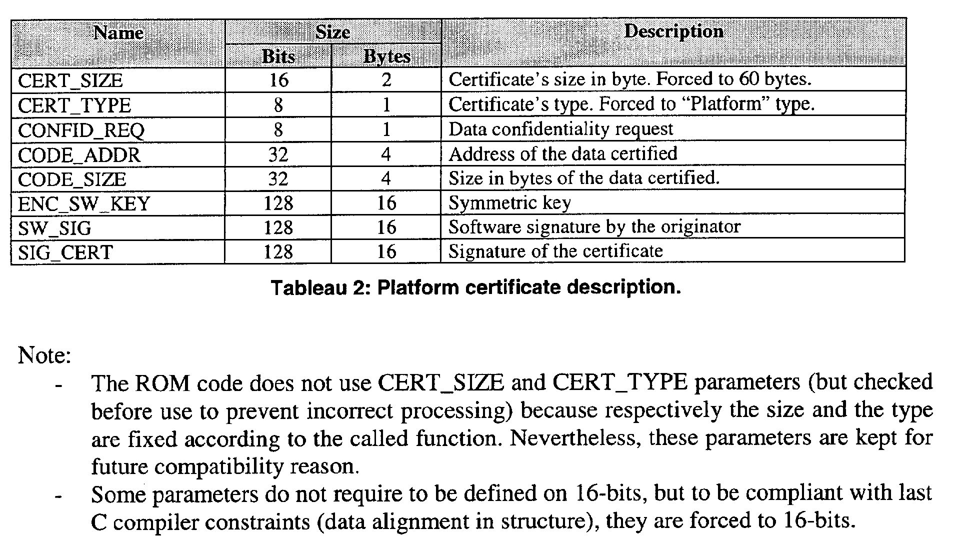

### Secure Boot Loader

### Synchronization on UARTs

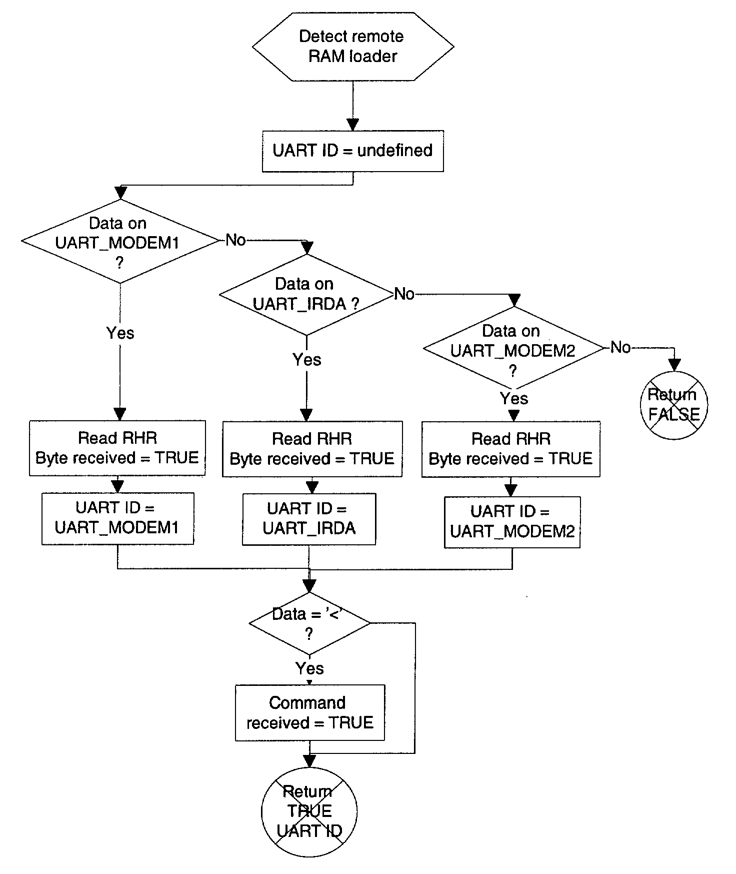

The global boot sequence, detailed in section 0, calls several time this procedure up to:
- A detection on the serial interface or
- The timeout is reached.

The duration of the polling is around 90 cycles.

### FLASH Programmer integrity check and authentication

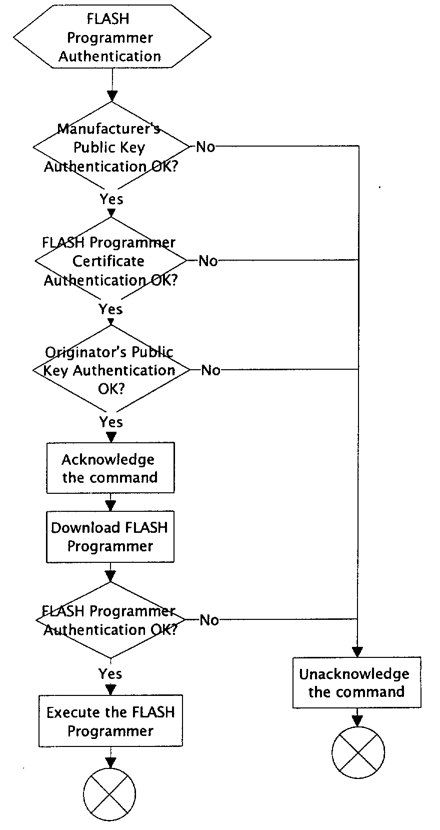

The first 3 steps are done before to download the FLASH Programmer in Internal SRAM. In consequence, the protocol used during code download requires to receive the certificate of the code. The Secure Boot ROM checks this certificate and acknowledges or un-acknowledges the command according to the result. In case of success, the protocol allows to download the code.

During code download, the hashing of this one is done in parallel on each byte received. At the end of the receive, the computed signature is compared to the signature embedded in the certificate after RSA decryption. In case of success, the FLASH Programmer is executed. In other case, the protocol returns in its default state and waits a new transfer request.

As soon as a synchronization has been detected, it is not possible to return in the step to certify and authenticate the Firmware located in external FLASH. The only mean to perform this is to reset the mobile.
All these sequences are described in detail in section 0.

### Firmware Authentication

The Firmware authentication sequence is performed as soon as the UART synchronization timeout is reached. The process performs the following steps:

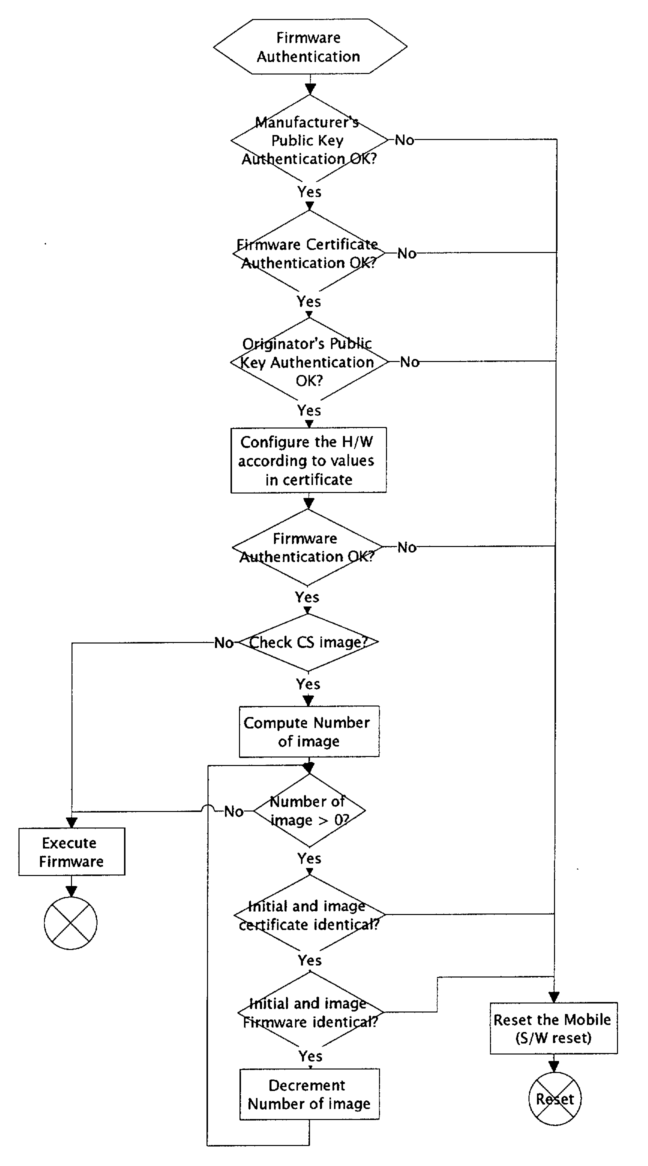

### FLASH Programmer download

The FLASH Programmer download process is called when synchronization on UART has been detected before to reach the timeout.
RAM loader procedure
PC - Mobile commands
The RAM loader contained in BOOT ROM code is considered as a slave application, i.e. the RAM loader can only receive command and send associated response in order to inform the remote application.

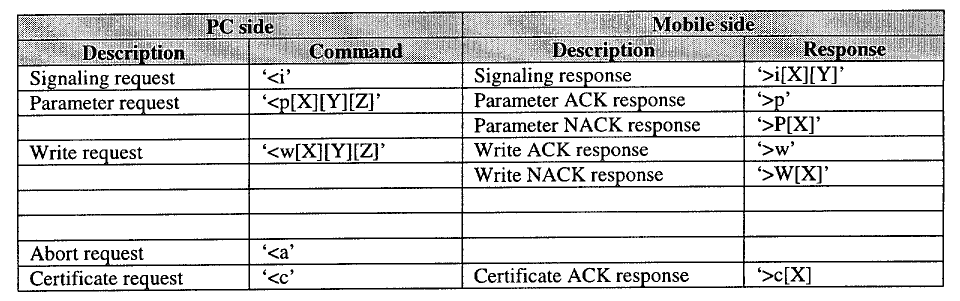

When an ABORT request is received, the mobile changes the UART baud rate with the default configuration and goes in SIGNALLING state. Acknowledgment is never sent to the remote application.

Note: Certificate Request is a new feature in order to facilitate the manufacturer to know the firmware version. Thanks to this certificate, the manufacturer can modify the emulation bit for example, generate a new certificate and then reprogram only this certificate in the external FLASH. This is helpful to re-enable permanently the debug features on the device.

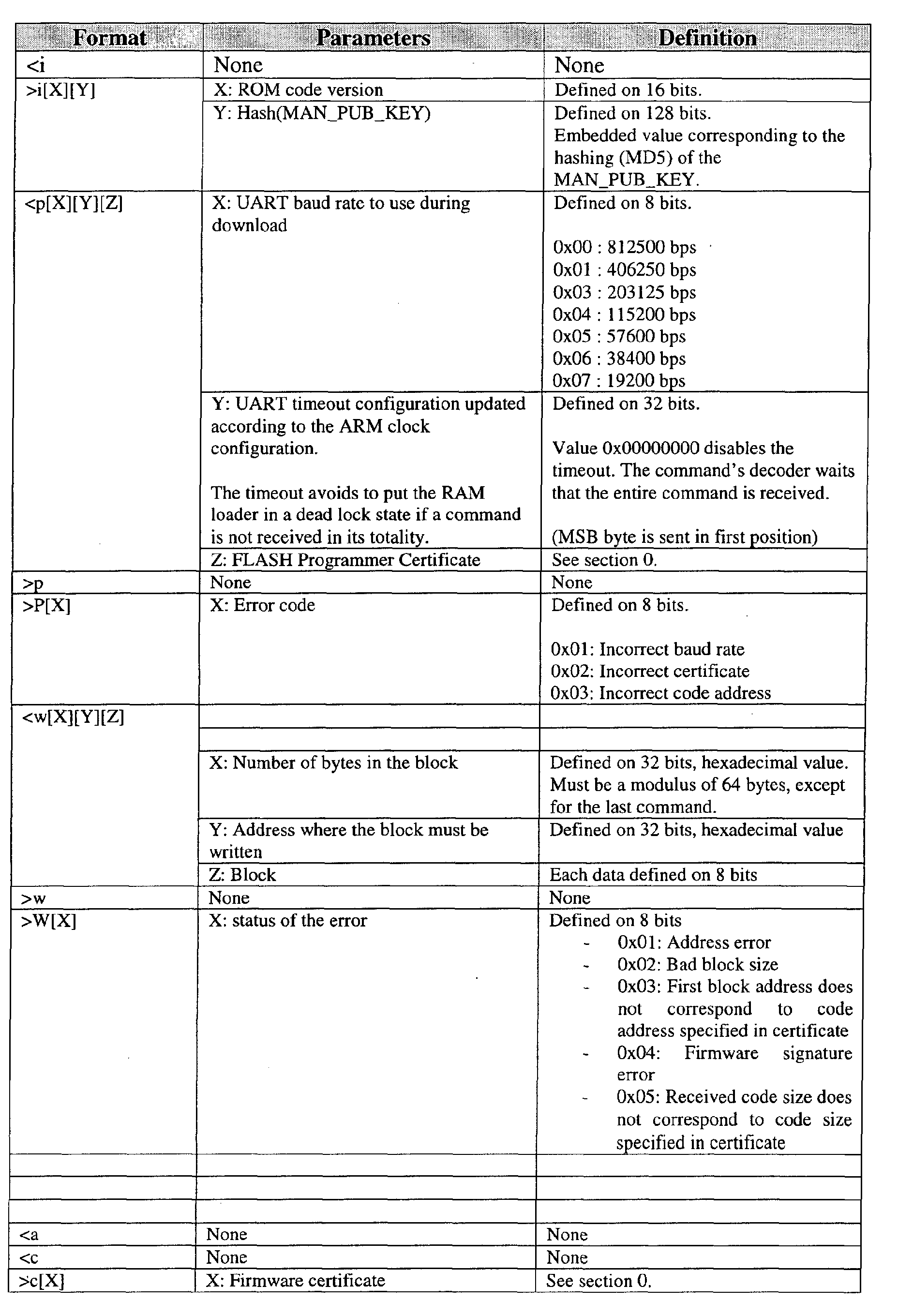

Before FLASH Programmer execution, the code is authenticated. In case of the certificate's checking fails, the state machine unacknowledges the Branch command and sends the computed code signature.

### SIR frame format

The data format in SIR mode is exactly identical to data format in Modem mode, except that frame is wrapped in IrDA compliant format:

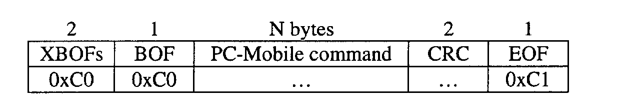

IrDA Escape sequence is applied on PC-Mobile commands data and CRC as specified by the IrDA standard.

### RAM loader state machine (Mobile side)

When an error occurs, the RAM loader:
Sends a NACK response,
Set default UART baud rate,
Goes in SIGNALLING state.

In the following state machine, Certificate is referenced to the FLASH Programmer certificate downloaded in Internal SRAM.

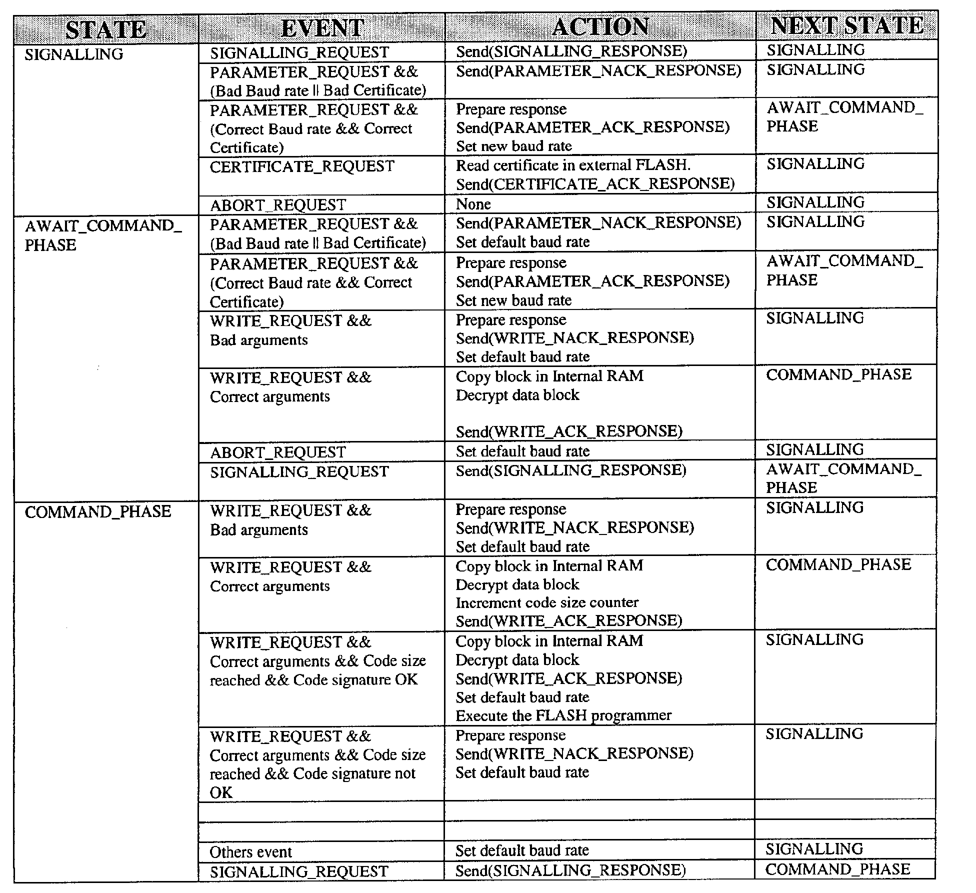

Command and response are decoded on the fly. Nevertheless, in order to avoid a deadlock state, a timeout is implemented during the character reception. When a timeout occurs, the RAM loader state machine stays in the same state and waits the next command.

Each time that a write command is received in AWAIT_COMMAND or COMMAND_PHASE states, the block address is checked in order to avoid erasing the data and stack sections of Secure Boot ROM application.

### RAM loader state machine (PC side)

When NACK response is received, the RAM loader:
- Set default UART baud rate,
- Goes in RESET state,
- Inform the user.

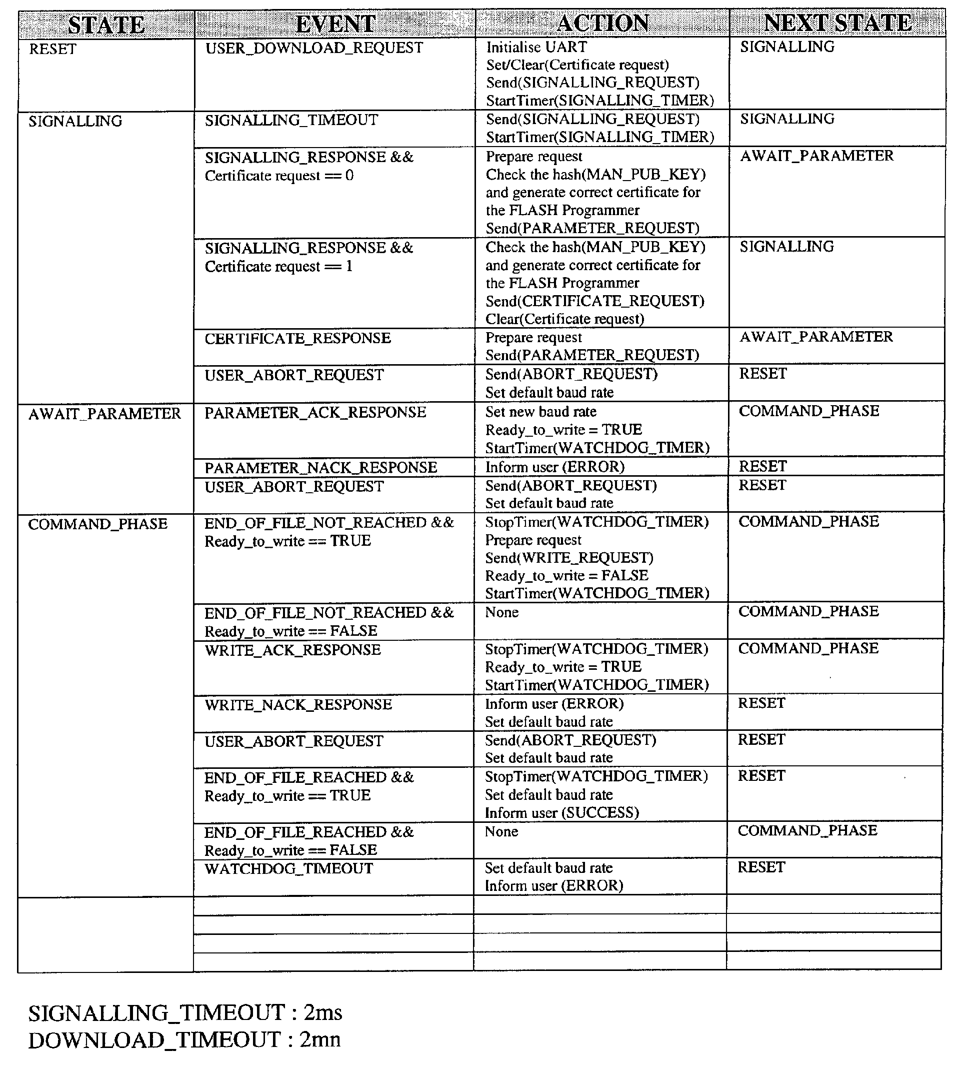

The state machine presented here below is just a proposal. Other state machines can be implemented, but they must respect the Mobile state machine.

### Description

1) The mobile is switched off
2) The user configures the PC application (FLASH Programmer to download, parameters...) and starts the communication with the mobile.
3) The mobile is switched on and waits the *Signalling* command coming from the remote PC on all serial interfaces. The serial interfaces are configured at the default data rate.
4) As soon as the *Signalling* command is received on the mobile side, a *Signalling* response is sent to the PC. The *Signalling* response contains the hashing value of the Manufacturer public key embedded in the device.
5) The PC receives the *Signalling* response and compares the hashing value of the Manufacturer public key with the content of a database. The PC application knows now the corresponding Manufacturer private key and then can generate the certificate of the FLASH Programmer to be downloaded on the mobile.
6) The PC sends to the mobile the *Parameter* request command, which contains the serial interface data rate and the certificate of the FLASH Programmer to be downloaded.
7) After *Signalling* response, the PC can also sends the *Certificate* request command to the mobile in order to receive the certificate of the Firmware located in external FLASH placed on CS5 of the hardware platform. This command is useful in order to re-enable, for example, the emulation bit of the certificate. The PC receives the certificate, modifies the emulation bit and generates the new certificate. The FLASH Programmer will be able to reprogram only the certificate section of the external FLASH without to know the code version or other specific things.
8) As soon as the mobile receives the *Parameter* request command, the certificate verification sequence is started. In case of error, the mobile returns to the PC a *Parameter NACK* response and goes in default state, waiting a new *Signalling* command. In case of success, the mobile acknowledge the command with a *Parameter ACK* response.
9) At this step, the PC is allowed to download in the 4Mbits of Internal SRAM the FLASH Programmer application. The download is performed thanks to the *Write* command. *Write* command can be sent in burst mode and the mobile acknowledge the command only after to have received the last burst. In case of incorrect burst index or incorrect address, the mobile unacknowledges the command thanks to the *Write NACK* response and goes in default state waiting a new *Signalling* command.
10) At the end of the transfer, the mobile checks the FLASH Programmer signature before to execute the application. In case of error, the *Write NACK* command is sent to the PC and the mobile goes in default state, waiting a new *Signalling* command.

### FLASH Programmer Certification and Authentication

The 2 verifications have been separated in the RAM Loader state machine in order to optimize the data transfer on the UART.
All steps mentioned in next sections are detailed in document [3].
FLASH Programmer certificate authentication and integrity check
The FLASH Programmer Certification is performed as soon as the Certificate has been received thanks to the *Parameters* command. In case of the verification fails, the RAM Loader state machine sends a *Parameters NACK* response to the remote device.

The certificate's verification is composed of:
Manufacturer's Public Key Authentication
Firmware Certificate Authentication
Originator's Public Key Authentication

### FLASH Programmer code authentication and integrity check

The FLASH Programmer Authentication is performed as soon as the full FLASH Programmer has been received. This event is detected by receiving the Branch command. In case of the verification fails, the RAM Loader state machine sends a Branch NACK command to remote device.

The code's verification is composed of:
- Firmware Authentication

### Note:

- The code's hashing is performed on the fly on each Write command in order to optimize the verification duration. Interrupt vectors re-mapping
The BOOT ROM is always located at the address 0000:0000, which implies that the interrupt vectors must be managed in the ROM code. Nevertheless, the ROM code does not know how to manage them and in consequence must give the hand to the application. In order to minimize the latency due to the re-mapping, the BOOT ROM considers that the interrupts are located in the Internal SRAM. Nevertheless, in order to minimize the constraints, only the address of the interrupt subroutine and the re-mapping instruction must be located in the Internal SRAM.

The start address of the Internal SRAM is 0800:0000, which gives an offset of 128MB between it and the BOOT ROM. This constraint implies that any instructions using relative offset (B, BL) can not be used to perform the re-mapping. Moreover, in order to reduce the latency, the BX instruction can not be used as it requires to manage a register, which implies that this register must be previously saved in interrupt stack. The only way and the more flexible one is to use the ADD instruction as following:
ADD PC, PC, #0x08000000

The advantage of this solution is that only the PC register is updated. Nevertheless, the ARM pipeline must be taken into account. The ADD instruction executed at the address 0000:0004 (undefined interrupt) will force the PC to 0800:000C (the ARM7 pipeline is 2 instructions in 32-bits, which gives a difference of 8 bytes. Whatever the interrupt mode, the ARM is always in 32-bits mode).

In the Internal SRAM, the manufacturer is in charge to set correctly the addresses 0800:000C to 0800:0024 with two possibilities:
Use a B instruction in case of the interrupt sub-routines are located in Internal SRAM
Use a LDR PC, [PC, #0x14] instruction. In this case, the addresses 0800:0028 to 0800:0040 must contain the address of the sub-routine. This method is useful in case of the interrupt sub-routines are not located in internal SRAM due to long branch limitation. This management takes 8 cycles per interrupt to perform the indirect call.

Whatever the solution used, these implementations do not impact MCU registers (in particular LR and CPSR) except PC one, which implies that the manufacturer does not need to perform specific management in the interrupt sub-routine (for the return for example).

ROM code consideration: the ROM code does not use the interrupts (IRQ and FIQ), but it is not possible to prevent the generation of others interrupt (Abort, Undefined...). Abort can occur only due to H/W issues (rhea in case of the design does not support full speed configuration (see section 0)).

Nevertheless, the Secure Boot Loader never initialises the address range 0800:000C to 0800:0024 in order to avoid conflict with the PRRM module (according to document [4], the ARM is put in wait in case of SRAM access conflict with the PRRM module). In consequence, if an interrupt occurs, the ARM will execute the content of the address 0800:000C-0800:0024:

On power-on reset, the 4Mbits of SRAM is erased, then the ARM will execute the instruction 0000:0000, which corresponds to ANDEQ R0, R0, R0 instruction. In consequence, the system is dead and must be reset.

On watchdog-reset, the 4Mbits is potentially not erased according to firmware configuration, then the address 0800:0000 is already configured. In this case, if an abort occurs during code fetch in the ROM, the abort is managed by the firmware located in FLASH.

To summarize the interrupt re-mapping concept:

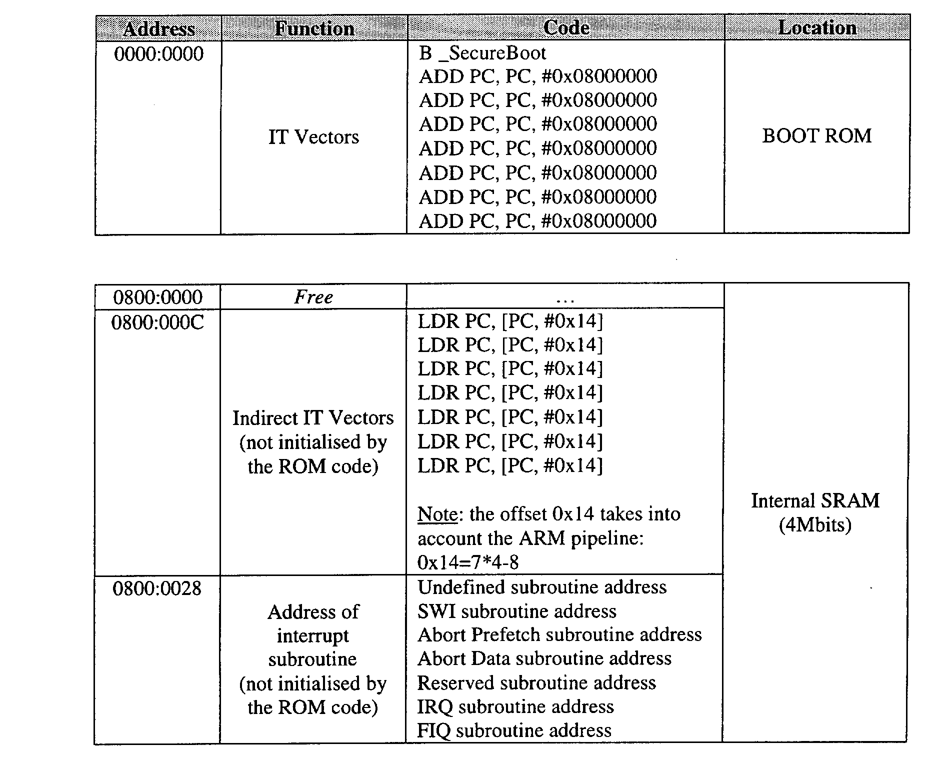

### ROM Services

The MCU ROM code contains also some services related to the security. These services allows to perform MCU processing in a secure environment:
IRQ, FIQ and Abort (Data or Prefetch) interrupts can not interrupt code execution. The mechanism to control the mask of the interrupts is performed by H/W. As soon as an entry point of the ROM memory is fetched, the input signals of the ARM core are masked. IRQ and FIQ can not be lost by this mechanism because they are working on level. The Aborts interrupts are discarded because they are working on edge. This supposes that the ROM code will never generate Abort interrupts. Then the manufacturer must manage correctly all the abort sources, which are:
Rhea interface: timeout and access factor must be set correctly
Share memory: all pointers passed to the ROM code must not do reference to a share memories, which are not allocated to the ARM.
Internal SRAM: all pointers passed to the ROM code must not do reference to a memory range which has a specific protection (read protected and privileged region)

The ROM code will not check these configurations in order to not impact the CPU performances.
As the code executed in ROM can not be interrupted, the CPU load of ROM services is targeted to be less than 200us at 52MHz on the ARM core. Binding and Unbinding services can be used in a segmented manner in case of the management of a great amount of data overflow the 200us. The manufacturer is charge to manage this.
Internal activities can not neither be spied nor modified (all internal buses are not reflected on the external ones)
Only the ROM code can configure the DES module to force the KEK to be in input of this module.

Moreover, the interest to have services in the ROM code concerns the CPU performances. All code executed in this memory can be done at full ARM speed, without any wait-state, and in 32-bits mode (internal data bus size is 32 bits instead of 16-bits on the external one).

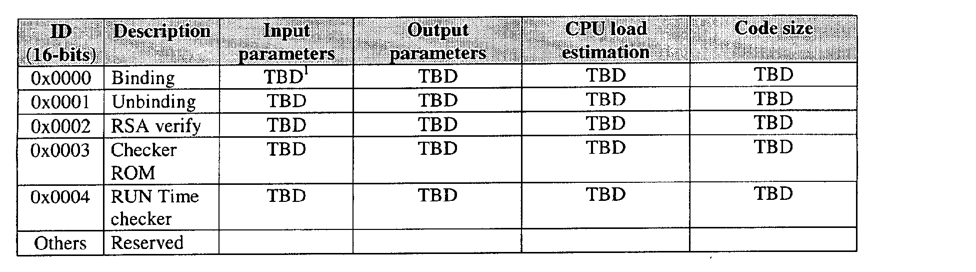

ROM services can only be called at a fixed address in 32-bits mode. The fixed address is also called entry point. The address of this entry point is fixed to **0000:0024.**

### API

The API of the ROM services is defined as below:

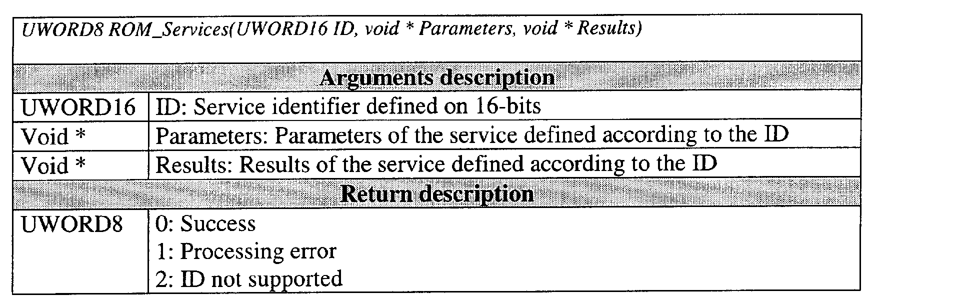

The manufacturer must follow this API in order to use the ROM services. The address of ROM services entry point is fixed to the address 0000:0024 and must be called in 32-bits mode. 16-bits mode is not supported and the manufacturer is in charge to change the processor mode before to call the ROM services.

The ID must be defined in an incremental value. The undefined IDs are defined between the maximum ID to the maximum value defining the ID (0xFFFF). All undefined IDs return the value 2 in the register R0 (according to TMS470R1x Optimize C compiler).

### Design Test Services

Entry point of the Design TEST services is forced to **0000:0020** in order to be compliant with H/W design. At this address, a simple *MOV PC, #0x84* instruction is done to re-direct the code at a fixed address. This instruction is also available at the address 0000:0060 in order to allow test when secure mode is active.
At the address 0000:0084, a Branch instruction is done in order to re-direct dynamically to the main test subroutine.
The call to the Design Test Services must be done in 32-bits mode (16-bits mode is not supported).

The ROM code identifier is located at the address 0000:0080 and is defined on 16-bits.

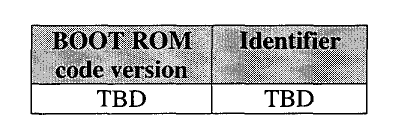

This ROM code identifier is also sent to the PC via the *Signaling* response command.

### Memory mapping

In order to speed-up the boot processing and in order to avoid conflict with PRRM module, the first 4Mbits and the full API memory are not used. This implies that the boot application data are located in the additional 1.5Mbits and in the Secure RAM.

The first 4Mbits are reserved to download the FLASH Programmer, which is allowed after synchronization on the serial interface. In this case, the duration is less critical and it is acceptable to have the ARM in waits to finish the erase of the 4Mbits.
Nevertheless, in order to reduce this duration, the boot application configures the ARM clock at 52MHz during the first instructions.

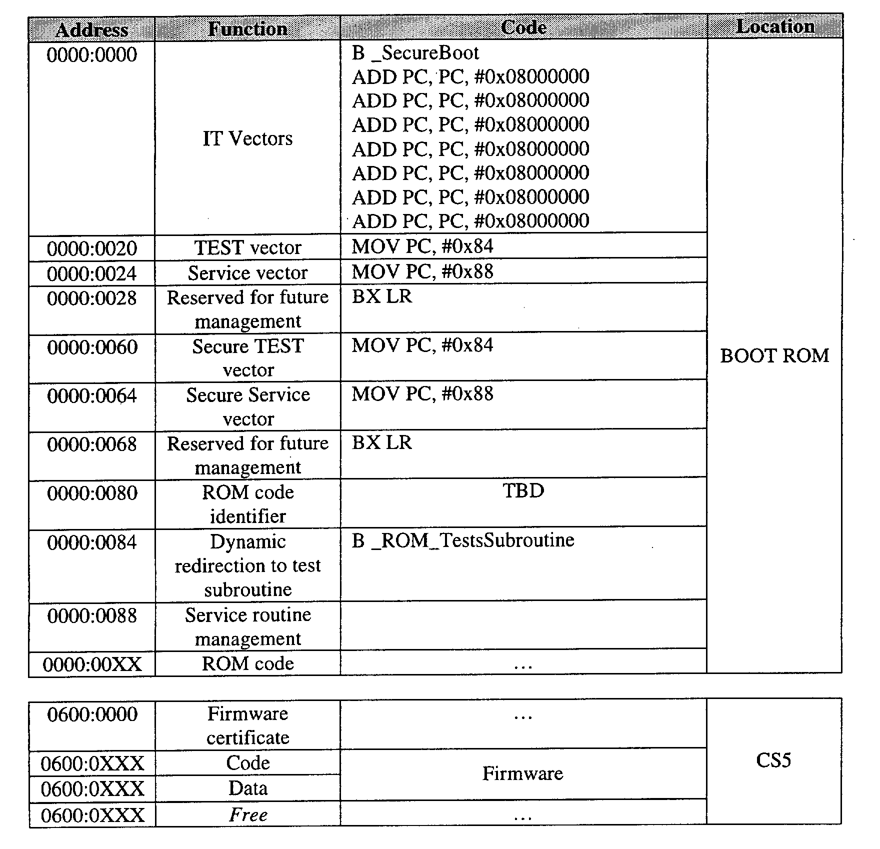

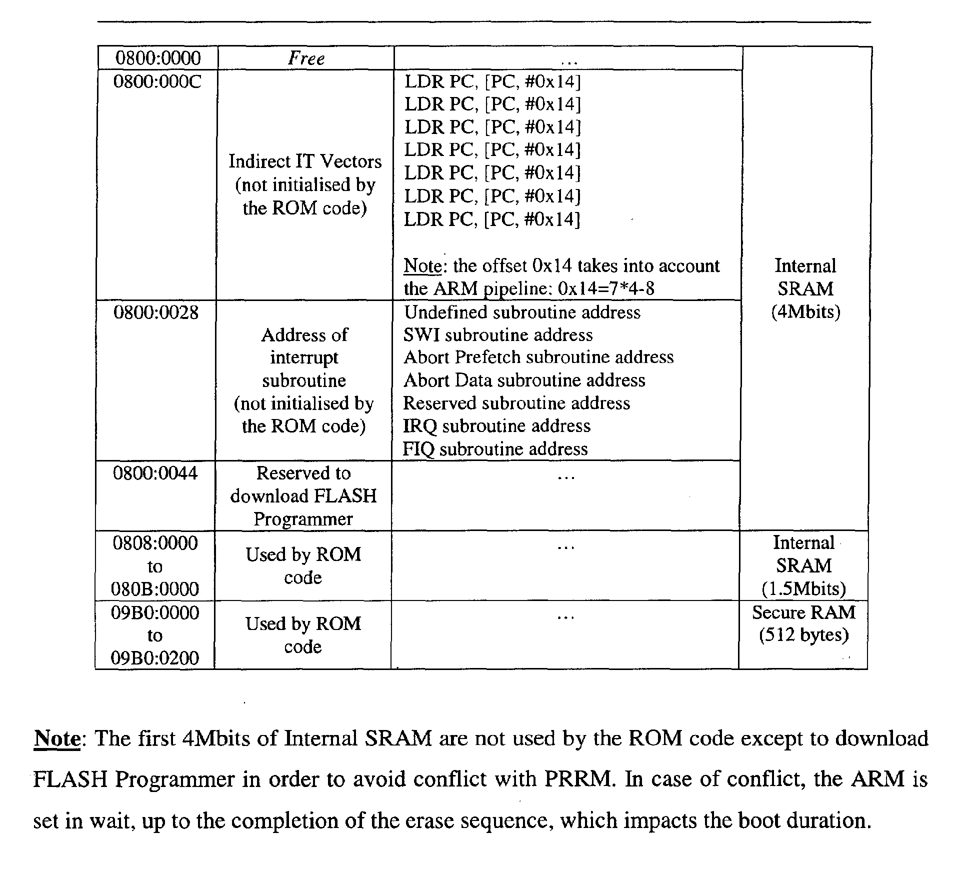

### Tools

### Gencert

The utility "gencert" is used to generate the firmware certificate. The following functions are available:
- RSA Public and Private keys generation
- Generation of Manufacturer certificate (MD5 and SHA-1 hashing)
- Update of COFF file with generated certificate

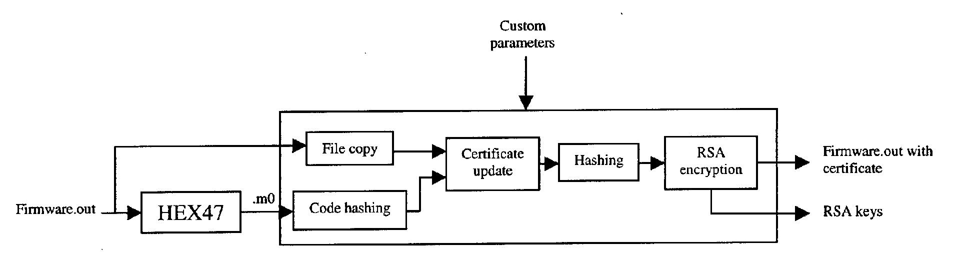

### Constraints

### Duration of the RSA decryption (Safenet version):

CPU load: depends on modulus size and public exponent value. Here below a summary in cycle number:

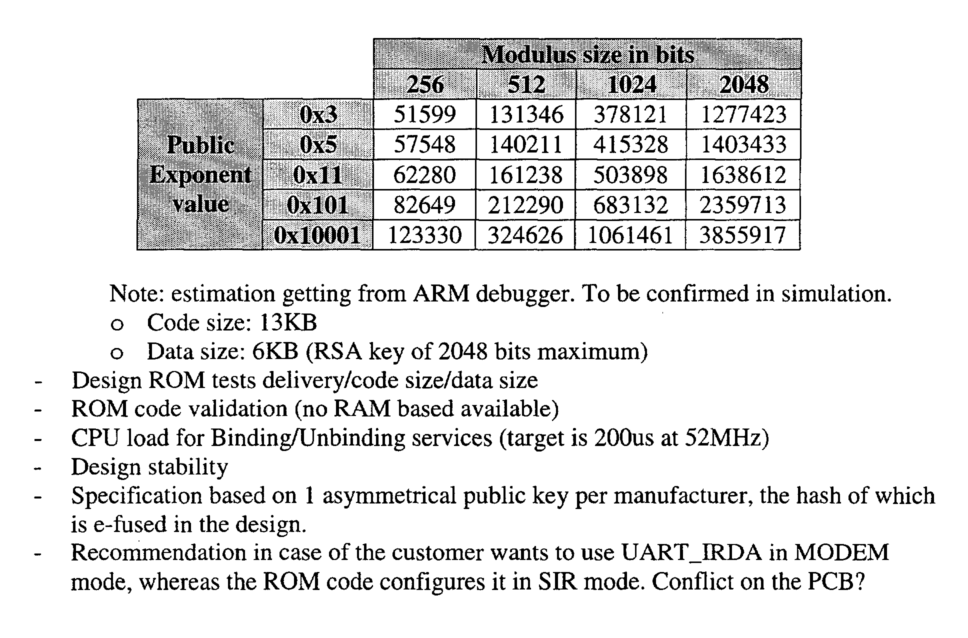

A detailed description of a hardware system that embodies the solutions discussed above will now be provided.

### Acronyms and Definitions

| | |
|---|---|
| PMCTLST | Protected Mode Control and Status |
| KEK | Key Encryption Key |
| RNG | Random Number Generator |
| **DES** | Data Encryption Standard |
| **PRRM** | Protected Resource Reset Management |

### Introduction

This portion of the document describes in a first part the implementation of a secure hardware module and in a second part the implementation of extra secure peripherals: a secure timer, a secure interrupt handler, a swap address controller and a cpu event controller.
The secure_hardware module and the above listed modules are needed to ensure the running of secure applications as described in. Other subsequent modules like hardware cryptographic processors, non-volatile symmetrical key, memory protection unit (and so on) complete the global secure environment solution in the chip.

The secure hardware module consists in three main parts that can be tightly linked together depending on the mode of use they are configured to. The three parts are: the secure ROM, the secure RAM and the protected mode control and status register (PMCTLST register).
The secure timer can be configured as a watchdog timer or as a normal timer (secure or non-secure).
The secure interrupt handler receives the interrupts from modules like the crypto processors (RNG and DES/3DES) or the DMA SC (Secure Channel) or the MPU. Its output is propagated to one of the input of the main interrupt handler.
The swap address controller when a swap is requested will force the MCU to branch to the secure RAM first address.
The cpu event controller allows to gate the IRQ, FIQ signals from main interrupt handler to MCU and the abort to MCU based on a disable exception request (when ROM is accessed or when the DCEX bit in the PMCTLST has been set high by software).

Three different modes of use are defined based on the need for an application to run in a secure or a non-secure hardware environment. The three modes are: the normal mode, the secure mode and the halted/suspended mode.
In the secure mode, an application can preempt secure resources by defining a firewall so that other non-secure applications cannot cross that limit and have an access to secure resources and secure data. A non-secure application (modem like) running in background to that secure application can interrupt it or the secure application can work in non-secure area. Both situations correspond to the halted/suspended mode. In normal mode, no firewall is defined. Potential secure resources can be accessed by any application.

An application possibly works in the three modes. The creation of a secure system relies on a mixed software/hardware solution. Mostly, the normal mode is going to be used based on document [3]. Hardware and software enhancements will need to be further envisaged in order to take maximum advantage of the entire secure mode solution.

### Secure Hardware module

Block Diagram

Figure 1 below shows the block diagram for the implementation of the secure solution. In red are the sub blocks that are part of the secure hardware module: the Protected-Mode Vector Management, the Secure-ROM Access Controller, the Secure ROM, the Secure RAM and the PMCTSL&ST register.

### Secure ROM

Document [2] presents the concept of a multi-layer software architecture in a secure platform in order to offer a secure programming environment to software developers. The first layer is the Boot and Control layer, which is the foundation of the security of the software architecture. The corresponding program code must have the highest resistance to adversary attacks. The necessary level of robustness will be offered with a ROM based approach.
This software (called also Secure Boot Loader), takes the control of the system activity upon a System Reset or an IC device reset. It cannot be interrupted or bypassed until the completion of its execution. It is not dependant on the OS. It includes software-library (Macro-function -PKA- & H-W Drivers) allowing for encryption Algorithm & H-W crypto-processor control. These software libraries are available for User Secure-Application through reserved secure-ROM entry-points.

### Structure

The secure ROM is a 48K Bytes ROM and consists in two areas: the first one called the vector sector (mapped from 0x0000 up to 0x007F) is dedicated to the software libraries entry-points as well as the exception vectors and test entry-points. The second one called the subroutines sector (remaining memory space from 0x0080 up to 0xBFFF) contains all the protected subroutines pointed to by the entry-points and the exception vectors as well as the boot code when coming from the reset exception (0x0000). 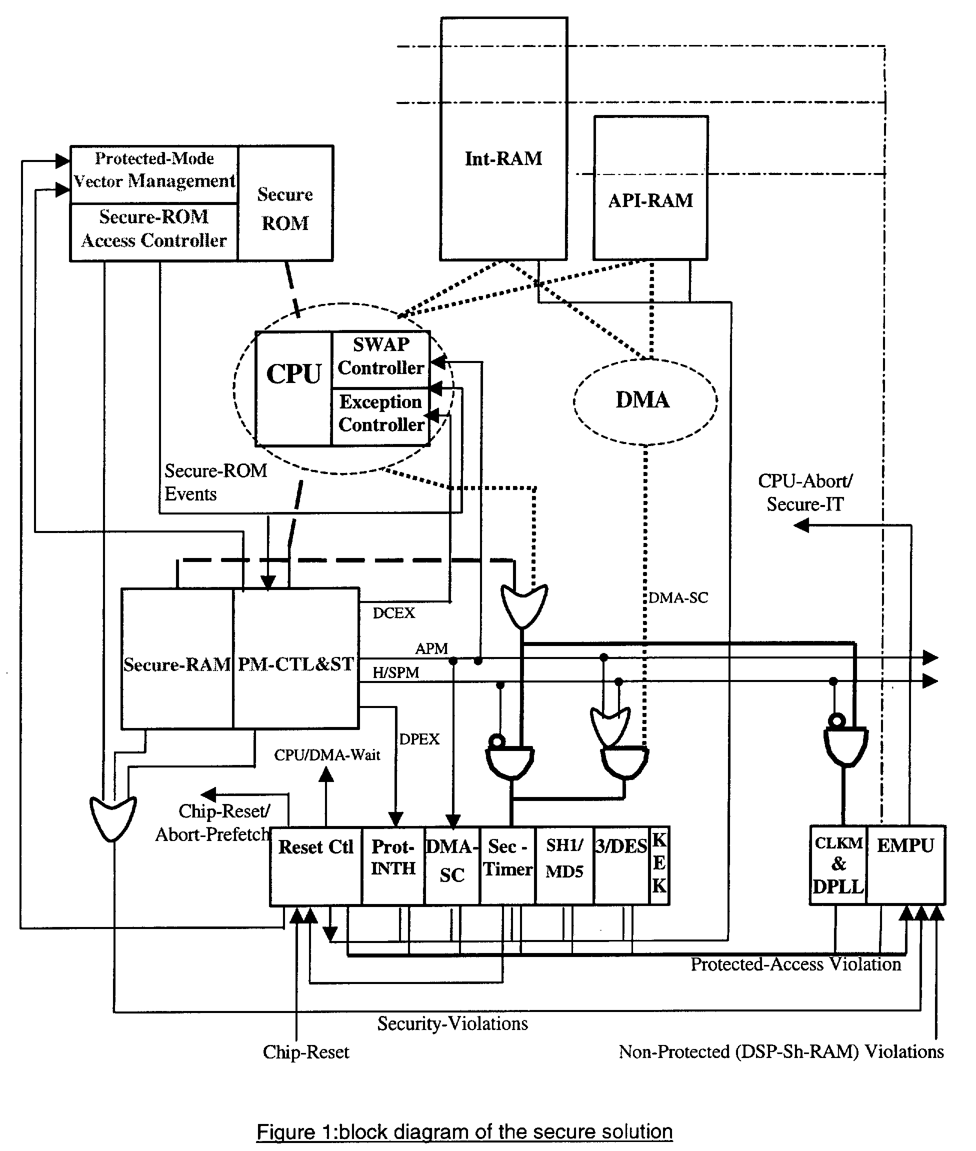 The Secure-ROM address is monitored to enable the second area only if the vector sector is accessed first.
Only an Op-Code fetch in the vector sector enables the second part (subroutine) of the ROM. The reset exception will automatically branch to the ROM boot code. Other exceptions will branch to subroutines located in internal RAM. Once the second part is enabled, access to the full ROM remains valid as long as OP-Codes are fetched into the first or second area.

In the vector sector area: there are potentially two entry-points to access the software libraries at addresses 0x024 and 0x028 as shown in Table 1. Only address 0x024 is used.

Exception vectors are duplicated:
- non-protected ARM exception vectors (0x0000:0x001C) accessible by any application. Those vectors must be "software re-mapped" (BR-Offset) pointing to the external memory space.
- protected-exceptions vectors (0x0040:0x005C) when secure mode has been activated.

Protected-Mode vectors entry points (PM-Entry, Dis-EXception, Exit-PM, Suspend-APM & Compl-Prot-InT) and TEST entry-points are also part of the vector sector area and enabled/disable depending on the protected/secure mode state.
It is a dedicated logic within the secure hardware module that re-maps all entry vectors and exceptions to the specific protected vector and protected exceptions sector area.

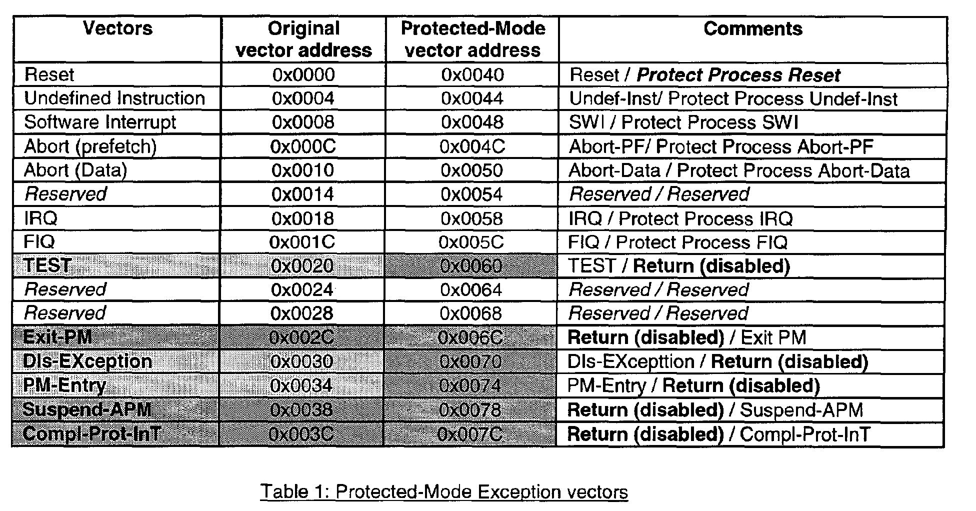

### Accessibility

### Double mapping

The ROM is double-mapped located in one hand at the beginning of the MCU memory space starting a 0x0 (this space is shared with external nCS0) and in the other hand in the 32Mbyte range near to the Internal SRAM at nCS7. Positioning the ROM within the 32Mbyte range near the internal SRAM permits direct access (branch) between the ROM subroutines and the SRAM task program.
As explained in [4], the boot can be performed by default in the external memory when security has been disabled, that is when eFuse bit 63 of the Die-Id has been fused. This means that the security environment is no more activable. A software bit allows then to choose either to keep the boot code in external memory or to re-map it in internal memory for ROM code debug purpose.

### Content Access:

Figure 2 shows the Secure-ROM Controller block diagram. This controller contains the Protected Mode Vector Management (PMVM) sub-part as well as the Secure-ROM Access Controller sub-part.

The PMVM features:
- Op-Code fetch from Secure-ROM detection (and will enable the access to "PM-CTL&ST" register, Secure-RAM (and to MPU area when in secure mode)).
- Opening of the Secure-Rom content thanks to the Secure-ROM Access Controller decoding.
- Data access to the Secure-ROM detection (prevent dump).
- Watchdog_prefetch signal (wd_rst_flag) from PRRM in Protected mode (APM High) forces mem_a5 to High in order to re-map the Abort Prefetch vector (address 0x0C) to the Exit protected mode entry point (0x2C).
- When the nbscan signal is set Low, address 0x20 is forced at the entrance of the ROM in order to only access the TEST entry point.

The Secure-ROM Access Controller features:
- Full Vector sector access detection.
- Original Vector sector and Protected Vector sector detection (control of the subroutine entry-point and event updating the "PM-CTL&ST" register).
- Re-mapping of exception vectors and entry-points based on the normal/protected mode state.
- Masking of the IRQ, FIQ and ABORT exceptions when Op-Code is fetched from the ROM (either vector sector part or subroutines part) by generation of a disable exception signal. In test mode, exceptions are allowed.

For the masking of the IRQ, FIQ and ABORT exceptions in functional mode:
- Each time Op-Code is fetched from the ROM or data is fetched from PMCTLST or Secure RAM as part of the ROM code execution, above exceptions are masked.
- Each time the Vector sector above address 0x020 is accessed in less than 4 clock cycles (protected exceptions or entry points of the ROM), the above exceptions are also disabled when leaving the ROM: a hardware process allows for example a secure-application to configure an internal SRAM area protected by MPU without being interrupted. If the vector sector area between address 0x000 and address 0x020 is accessed in less than 4 clock cycles (non-protected exceptions), the hardware process is not activated and the non-protected exceptions are not masked when leaving the ROM. The exceptions are kept disabled as long as the program does not fetch code back into the ROM. To stop the disabling effect of exceptions when ROM is accessed in a short period of time and once for example the MPU has been configured, the program must either return to the ROM and fetch an Op-Code for a duration longer than 4 cycles (for example PME subroutine) or access any address from 0x0 to 0x7F in the vector sector area (for example Dis-Exception).

### Access protections:

- The Secure ROM cannot be patched.
- The Secure ROM content cannot be dumped.
- Any data direct access to the subroutine part of the Secure-ROM from outside the Secure-ROM is denied, generates a security violation (signal transmit to the MPU for abort generation) and sets the output data bus to a low state.
- An Op-Code fetched from outside of the Secure-ROM disables the access to the second part of the memory (an Op-Code fetch in the vector sector only can re-enable the Secure-ROM).
- ROM data-bus drives all 0 when nCS-Secure-ROM (filtered) is not valid.
- DMA accesses are not serviced. (output data bus return all 0). The Secure ROM controller does not provide back an access violation signal.
- In emulation mode, access to the subroutine part is denied.

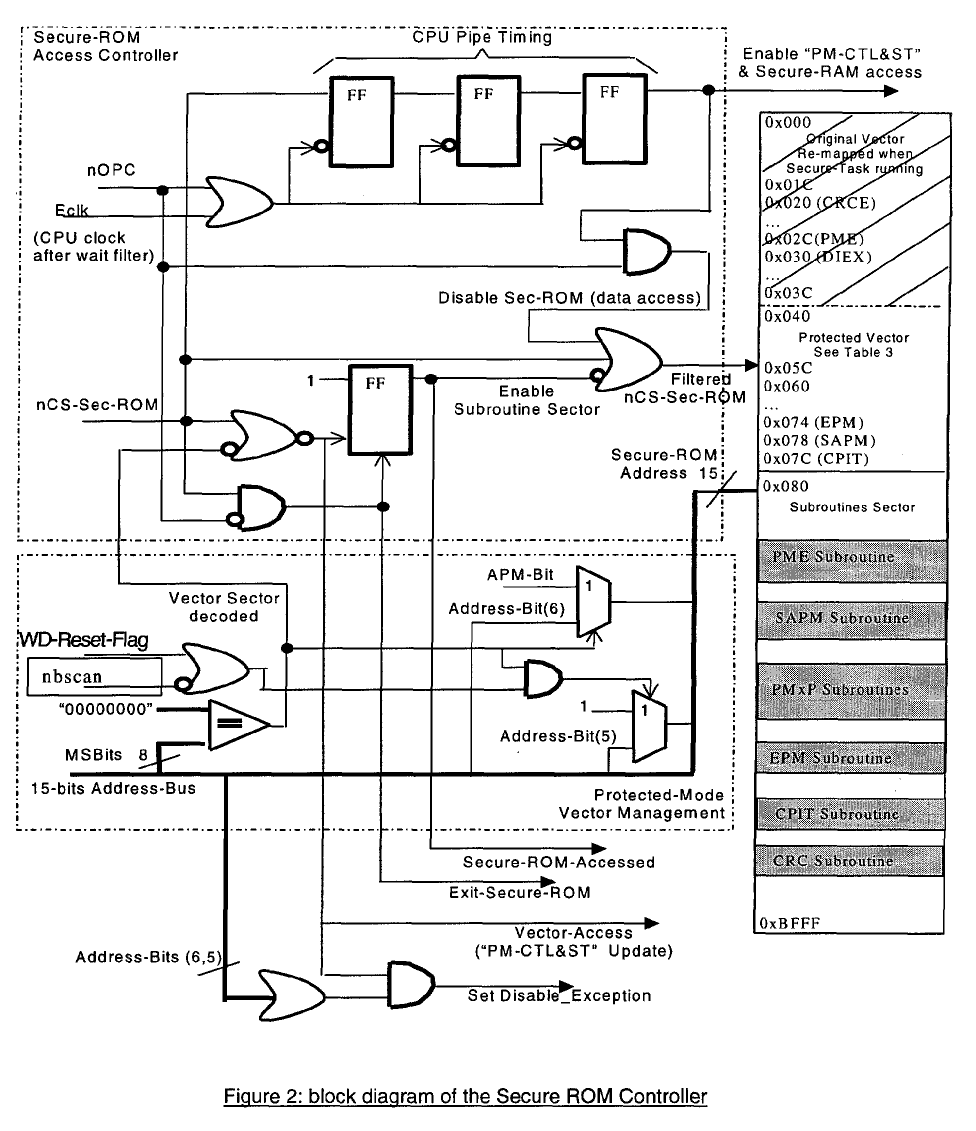

### Secure RAM

### Structure

The Secure RAM is a dedicated 512 bytes (128x32-bit) RAM mainly used for secure context stack operations and short data/variables storage. Bytes can be written, not only words.

### Accessibility

### Content Access:

The secure-RAM can be accessed only through code fetched from secure-ROM, hence cannot be used by any secure or non-secure application resident in protected or non-protected SRAM.

### Access protections:

- The Secure RAM cannot be patched.
- The Secure RAM content cannot be dumped when not in APM mode.
- Any data direct access to the Secure-RAM from outside the Secure-ROM code is denied, generates a security violation (signal transmit to the MPU for abort generation) and sets the output data bus to a low state.
- RAM data-bus does drive an "all-0s" value when nCS-Secure-RAM is not valid.
- DMA accesses are not serviced.
- In emulation mode, access to the Secure RAM is denied.

### Reset Process

The content of the Secure RAM is cleared on reset (see document [7]) using the BIST controller of the Secure RAM.

### PMCTLST

### Structure

The Protection Mode Control & Status register bits value provide the current normal, halted/suspended or secure mode status. The protected hardware resources are enabled/disabled depending on the PM-CTL&ST register content, which is updated from a combination of event hardware detection and software controls. The PM control & status register contains 11 bits (plus 4 spare bits).

All bits are read/write/set/clear through code fetched into the Secure-ROM only. Bits set and bits clear access are also available that reduce the "read-modify-write" operations. The table that summarizes the register with its bit values at reset is visible at paragraph 5.

**Bit 15**: Key enable (**Key_en**) bit. See document [5] for explanation. When set High, it enables the downloading of the Key Encryption Key (KEK) into the DES crypto-processor. The software Secure-Boot must disable the KEK input after secure services are completed. It is the only bit within the PMCTL&ST register to be not scannable.

**Bit 14**: Active Protected Mode (**APM**) bit: allows to define the secure environment (firewall) by allowing the MCU to work in a protected-by-MPU SRAM area and having access to dedicated secure hardware resources. It enables the vector re-map (PM-Vector-Manager) and the access to the protected resources. The Active-Protected-Mode cannot be re-entered. Once APM is set, only one secure application can have an access to the secure environment. An attempt to re-enter the protected mode returns "void". Upon vector-sector access, the APM bit is automatically cleared.

**Bit 13**: Halted/Suspended Protected Mode (**HSPM**) bit: this bit set High indicates that the protected mode has been initiated, and is currently halted due to a non-protected exception (SWI, IRQ, FIQ, Abort, Undef) or a protected exception (P_IRQ) or has been suspended by the secure program itself. In halted mode (not qualified by the SUSP bit; see below) it disables the protected-interrupt (DPEX bit see below) until APM is re-entered. In Halted/Suspended-Protected-Mode the protected resources are still enabled (configuration is maintained/locked) however cannot be accessed by the Processor. This mode is re-entrant.
The HSPM signal available at the output of the secure_hardware module results from the OR'ing of this R/W/Set/Clear register bit and a combinatorial logic. The combinatorial logic generates automatically an internal HSPM upon ROM vector-sector access. This internal signal is automatically set high if APM was previously active (APM=1) else it stays low. Below bits SUSP and PPIT can also set High the HSPM internal signal. When PMCTLST is read out by software, only the programmable HSPM bit is read (not the OR'ed signal).
In emulation, when nsuspend is set Low, the HSPM signal is forced Low: this allows to have an access to any crypto modules register configuration.

**Bit 12**: Suspend (**SUSP**) bit: this bit set High qualifies the H/SPM mode as a suspended mode. It indicates the MCU has configured a secure environment and is proceeding with a non-secure task outside of this environment. It prevents from disabling (DPEX bit see below) the protected-interrupt while H/SPM=1. A protected-interrupt can occur either in Suspended mode or in Normal mode (for example the secure timer can be used as normal timer). In normal mode, the "protected" interrupt used as "normal" interrupt (and consequently the PPIT bit) has no effect on the signal HSPM.

**Bit 11**: Pending Protected Interrupt bit (**PPIT**): this bit set High indicates a pending protected-interrupt. It forces the protected interrupt to be disabled (DPEX bit see below) until the current protected-interrupt is serviced. Nested protected-interrupts are not allowed. When the Software secure-controller reads this PPIT bit to 1 the MCU will branch to the protected-interrupt handler. A protected-interrupt can occur either in APM mode or in Normal mode (for example the secure timer can be used as normal timer). In normal mode, the interrupt has no effect on the signal HSPM since the PPIT bit is not generated.

**Bit 10**: Active-Protected-Interrupt (**APIT**) bit: This bit set High by software only indicates that an active protected interrupt is being processed. It forces the protected interrupt to be disabled (DPEX bit) for other protected interrupts until the current protected-interrupt is serviced. When re-entering to service a protected-interrupt, then the Software secure-controller (PME subroutine) set and clears the APIT and PPIT bits respectively.

**Bit 9**: Disable CPU Exception (**DCEX**) bit:
This bit set High activates a global mask of CPU's event inputs preventing all event exceptions coming from the main interrupt handler (FIQ, IRQ) and the Abort to interrupt the CPU. FIQ & IRQ are masked only and not canceled whereas Abort is lost. Like the HSPM bit, the signal DCEX at the boundary of the secure_hardware module is the result of an OR'ing between this DCEX R/W/Set/Clear bit and some combinatorial logic that generates internal DCEX signals. This combinatorial logic includes:
hardware setting of DCEX upon vector-sector access above address 0x020
detection of the number of op-codes-fetch cycles in the vector-sector area: if less than 4 cycles and address is below 0x020: no DCEX High generated when leaving the ROM. If address is above 0x020, the DCEX signal is set High for as long as the ROM is reentered whatever the access duration. If more than 4, the DCEX signal stays High as long as the MCU is executing the ROM code and cleared when leaving the ROM.
When PMCTLST is read out by software, only the programmable DCEX bit is read (not the OR'ed signal).

**Bit 8**: Disable Protected Interrupt (**DPIT**) bit: This bit set High masks the protected-interrupt request to the interrupt-handler module. Protected-interrupts are masked only and not canceled. Like for the DCEX signal, the DPIT signal at the boundary of the secure_hardware module is the OR'ing of this R/W/Set/Clear DPIT bit with combinatorial logic. The combinatorial part of the DPIT signal is partially based on the same op-code-fetch detection process when vector-sector area is accessed than the combinatorial logic of the DCEX signal. Moreover, extra combinatorial logic is added to take into account the SUSP, PPIT or APIT bits. When one of those bits is set High, the DPIT signal is also set High. This bit is automatically cleared when Secure-ROM is no more accessed depending on SUSP, PPIT & APIT bits value. When PMCTLST is read out by software, only the programmable bit is read (not the OR'ed signal). Protected-Interrupts are non re-entrant; the DPIT bit is maintained set to 1 until the Protected-Interrupt processing is completed and the APM (if set, with no pending-halted) is re-entered. In addition, during exception processing (halted) in secure mode, protected interrupts are automatically disabled.

**Bit 7**: Emulation enable (EMU_EN) bit: This bit set High enable JTAG access and internal processing visibility. It is set High by software by decoding the configuration parameters of the flash program certificate. When the effuse bit 63 has been fused, the EMU_EN bit is forced High.

**Bit 6**: Lock enable (Lock_en) bit: when set High, this bit will prevent any access from the external bus by zeroing the address and data busses.

**Bit 5**: Force test bit: When set high this bit forces the circuit in test mode (nbscan low)

**Bits 4 to 0**: Spares (**SPARES_x**) bits: Those bits can be R/W/Set/Clear independently one from another and are available for any extra programming.

### Accessibility

### Content Access:

The PM-CTL&ST register can be accessed only from code fetched into the Secure-ROM whatever the protected mode or normal mode.

### Normal / Secure mode access protections:

- The PMCTLST cannot be read, written, set or cleared directly by SRAM code.
- Any data direct access to the PMCTLST register from outside the Secure-ROM code is denied, generates a security violation (signal transmit to the MPU for abort generation) and sets the output data bus to a low state.
- PMCTLST dout bus does drive an "all-0s" value when (read) access to PMCTLST is not valid.
- In emulation mode, access to the PMCTLST is denied.

### Secure timer

Similarly to the MCU watchdog timer, a secure timer is added in the secure solution so that it can be programmed as a secure watchdog timer when a protected space is defined in secure mode. It can be used as a second watchdog timer in normal mode.

### Structure

The secure timer consists in two parts:
same 16 bits watchdog timer (same RTL code) as the one used in the TOP ARM structure. (see document [8]).
a wrapper that filters the secure/control signals

The secure timer receives the VTCXO/14 (clkm_slicer_bis clock / 14) clocking source like the standard WD-timer. This clock is gated in the wrapper by an active high control bit (SEC_WDG_CLK_EN) provided by the PRRM module (see document [7]). When the chip is in emulation (nsuspend is set Low), the clock is also shut down. When the chip is running a ROM test program, the clock is forced active.
The secure timer receives the Halted/Suspended Protected Mode (HSPM) signal from the secure hardware module. This signal is written synchronously to the arm_mclk clock and is resynchronized within the wrapper to the timer clock (clkm_slicer_bis clock). In the PRRM the HSPM signal when set high prevents the SEC_WDG_CLK_EN from being written. This means that the control of the gating of the timer clock can be activated only when HSPM is set low.

The timer can generate an active low interrupt pulse when in timer mode or an active low reset when in watchdog mode. The wrapper propagates the watchdog reset to the PRRM and the interrupt signal to the secure interrupt handler. In the PRRM, the resulting reset signal can generate either a global chip reset signal or an MCU abort prefetch.

### Accessibility

The secure timer is accessed via the rhea bus when HSPM is Low. When HSPM is set High, the secure timer configuration is locked. A protected mode access violation is generated when the secure timer is accessed in write mode.
This protected mode access violation is OR-gated with all the others protected access violations originated by all protectable modules. The resulting signal is supplied to the MPU that can forward this violation as an Abort to the CPU.

### Secure interrupt handler

The "main software interrupt handler" executes in non-protected mode, hence cannot access protected-area to service secure interrupt. All interruption sources of the protected resources are connected to a "protected software interrupt handler", whose output defines a unique protected interrupt line. This line is routed to the main interrupt handler.

When the unique protected interrupt line is activated the "main software interrupt handler" must re-address the "protected software interrupt handler" by pointing to the protected mode entry vector within the ROM. The "protected software interrupt handler" must be loaded within the MPU boundary...it take care to determine Protected-interrupt source thanks to the "Protected hardware interrupt-handler" support...
The Protected "hardware INTerrupt-Handler" is a reduced version of the existing "INTH module". This block manages interrupt-line sensitivity (level/edge), interrupts priority, interrupt mask and indicates which protected resource must be serviced. It is controlled through the RHEA I/F bus.

The protected INTH can be read whatever the HSPM state, however configuration is locked in write mode when H/SPM = 1. Output interrupt is enabled when either H/SPM is Low or H/SPM is High and the system is in "Suspend" mode.

The protected INTH generates a protected access violation if accessed in write mode when non-authorized.
The protected access signal is OR-gated with all the others protected-Access violations (all protect-able modules). The resulting signal is supplied to the MPU that can forward this violation as an Abort to the CPU.

### Swap Address Controller

The SWAP address controller reduces SWAP operation latency when the Protected-Mode must be halted to execute non-protected exception.
When a SWAP instruction is detected (active LOCK signal/ARM7) while the Secure-ROM is accessed and APM=0, then the SWAP address controller takes over the CPU Address-bus and forces the SWAP address to the first address of the secure-RAM. The first address of the secure-RAM contains the Secure-Stack pointer value. It has been set during the Initial PM entry.

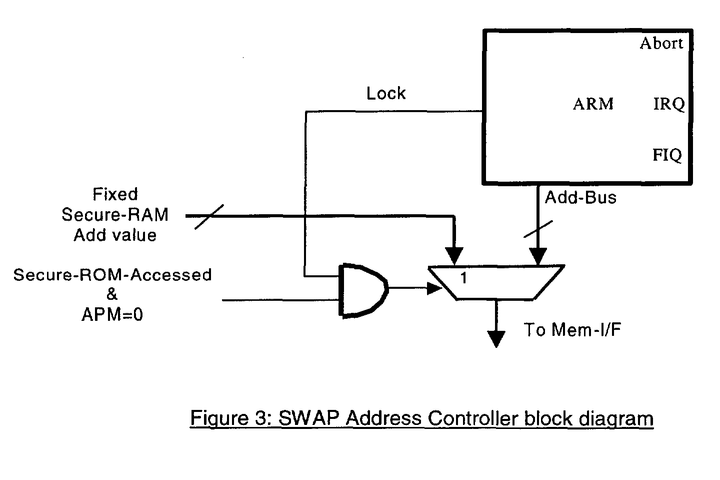

### CPU event controller

Event-exceptions (IRQ, FIQ, Abort) are globally masked to the CPU during Software secure-controller processing for as long as the Secure-ROM is accessed. Any access to the Secure-ROM vector-sector set DCEX bit however it is recommended to access the specific DIEX-vector before the PM preliminary setup.
DIEX-vector access is decoded within the Secure-ROM Access Controller. This event set the DCEX bit. The code fetched executes a single return instruction that makes the CPU to come back at the PM preliminary setup processing.

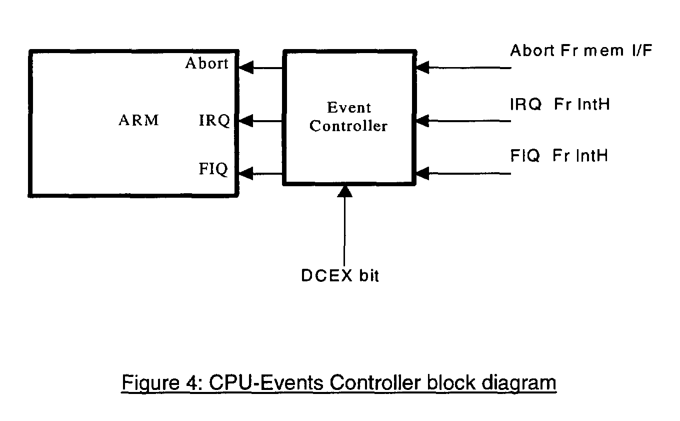

When the software secure-controller is exited and branches to an address outside the Secure-ROM range, then the bit DCEX is cleared unmasking the event-exceptions...
The DCEX bit can also be controlled from the Software secure-controller.
When DCEX is cleared (event-exceptions unmasked), the application can still control the interrupt to the CPU through the CPU's CPSR register or via the INTH hardware module (as usual).

### Registers

### PMCTLST registers

This register is read/write at one address and clear and set at two other consecutive addresses. PMCTLST Register: Address (hex): 0x09C0:0000

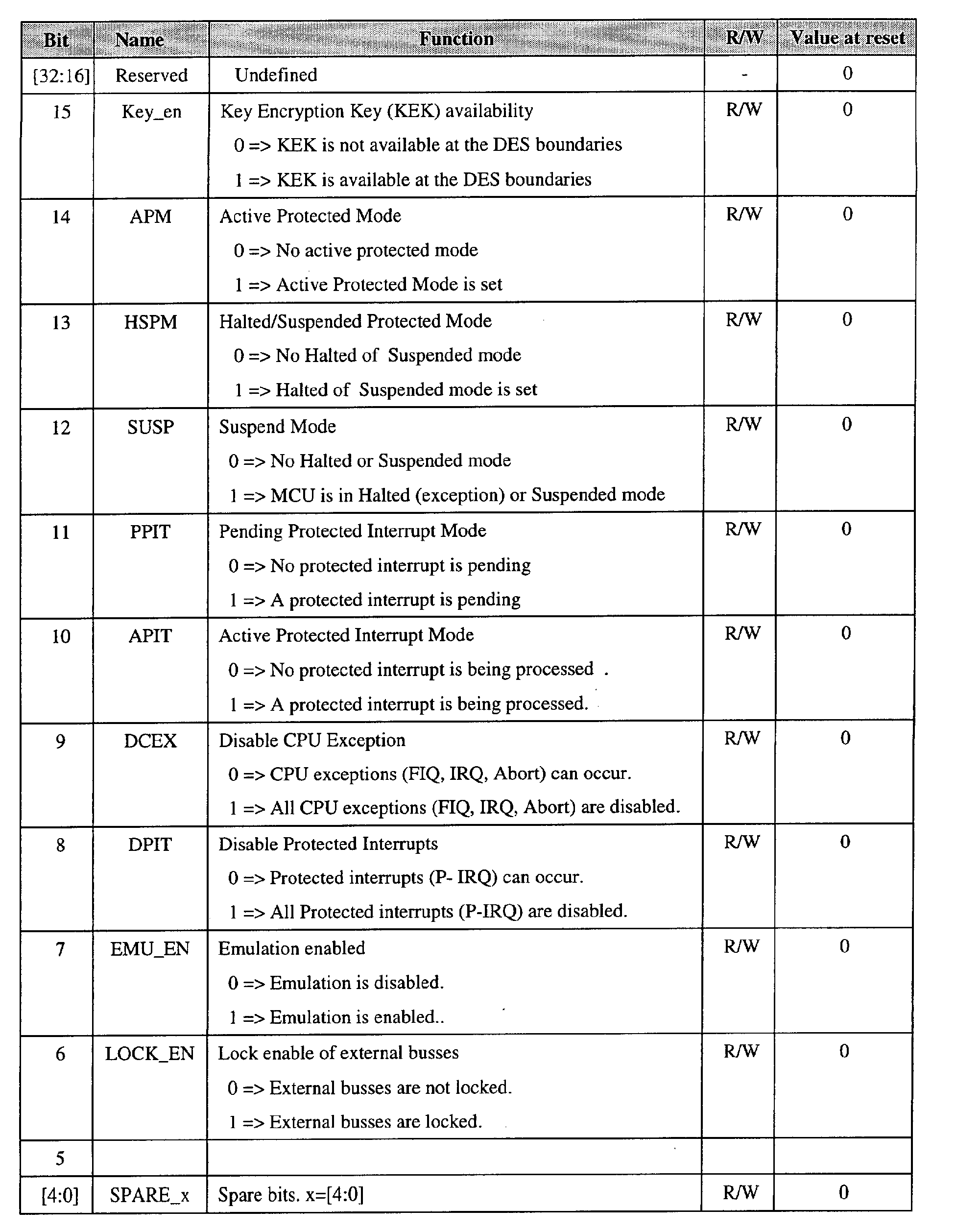

### PMCTLST Register Access Set: Address (hex): 0x09C0:0004

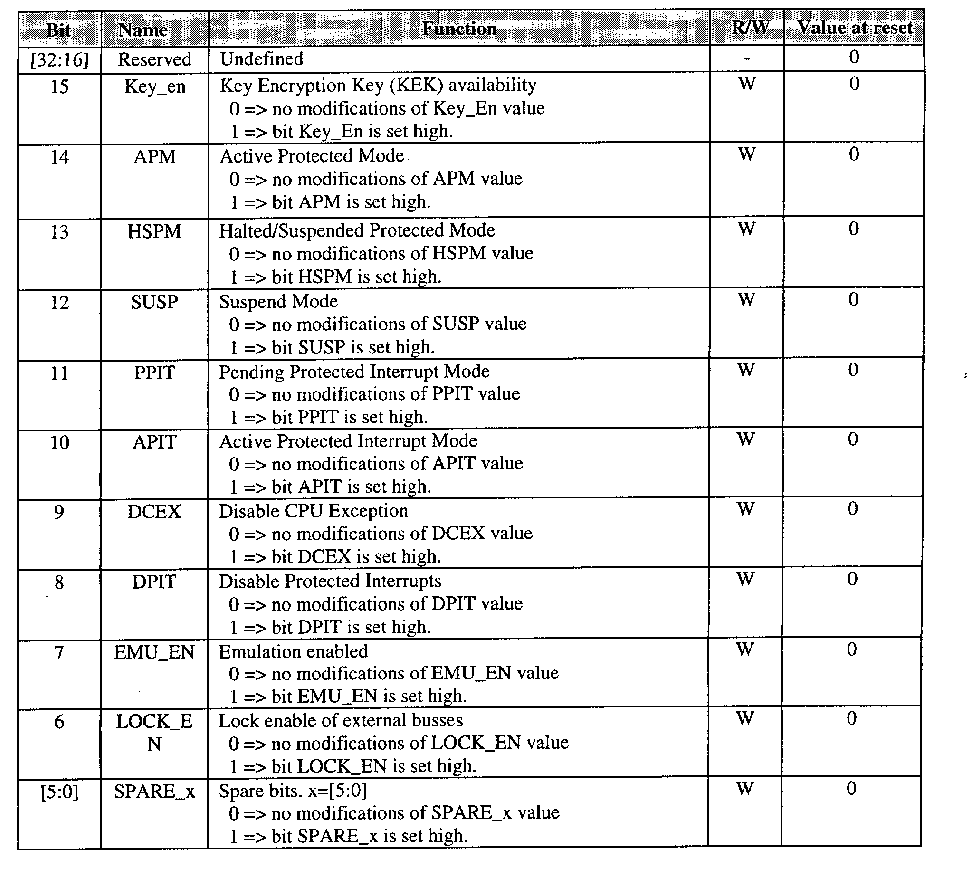

### PMCTLST Register Access Clear: Address (hex): 0x09C0:0008

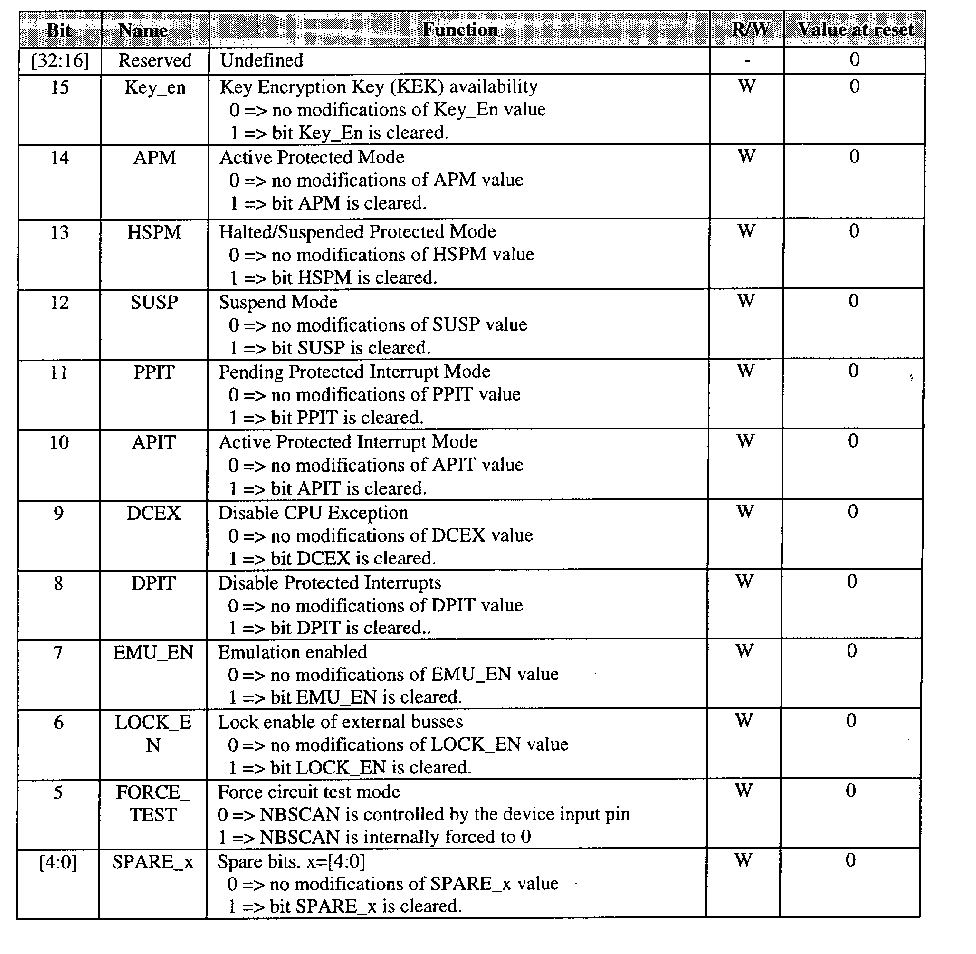

### Secure timer registers

They are the same as the ones of the timer watchdog.

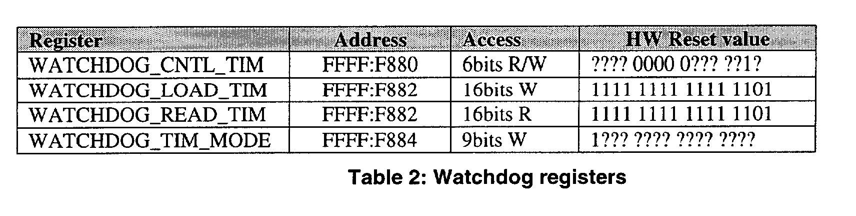

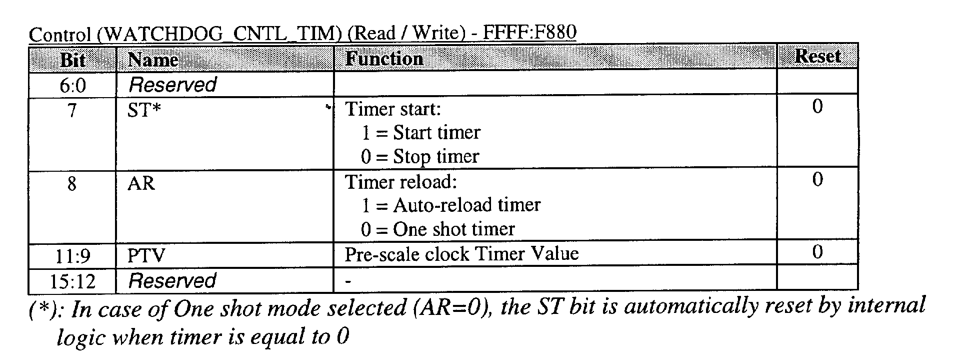

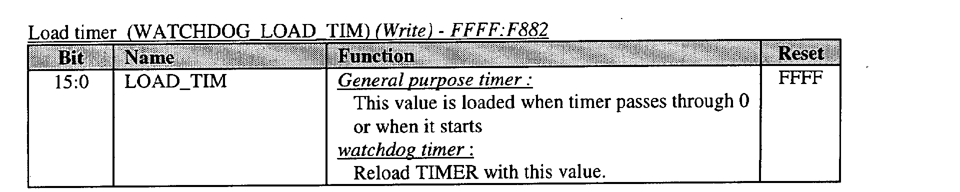

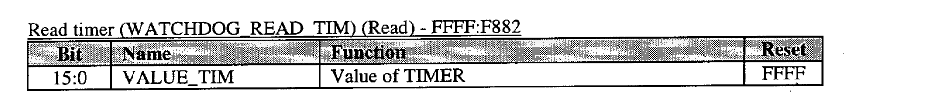

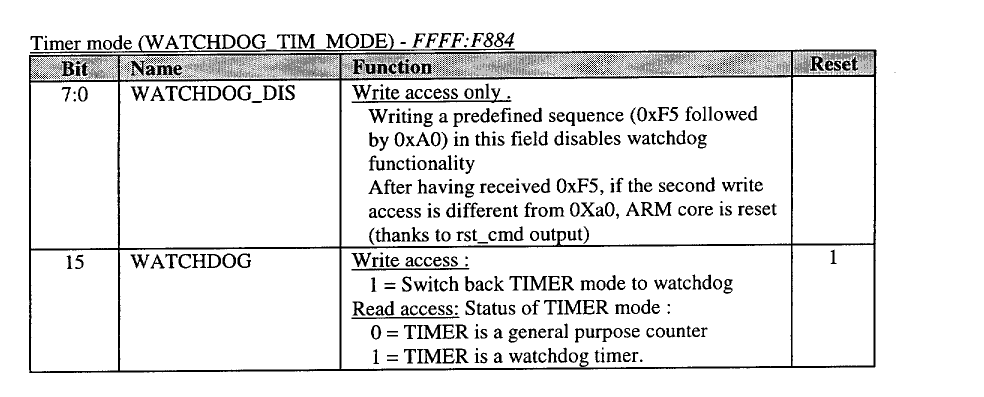

### Secure interrupt handler registers

### INTH register - FFFF:FA80 FFFF:FAA8

All these registers are controlled directly by the internal RHEA bus. The secure interrupt handler is selected when CS(3:0) is equal to 5.

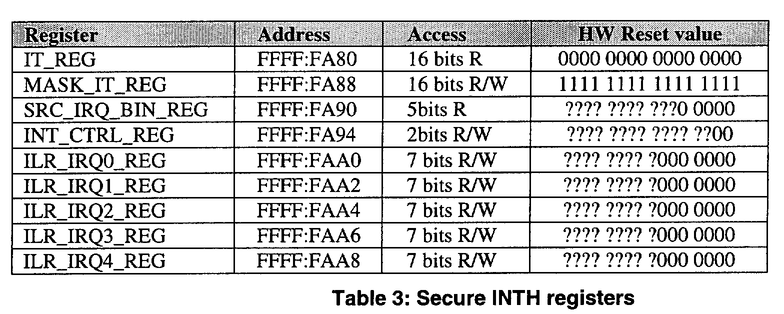

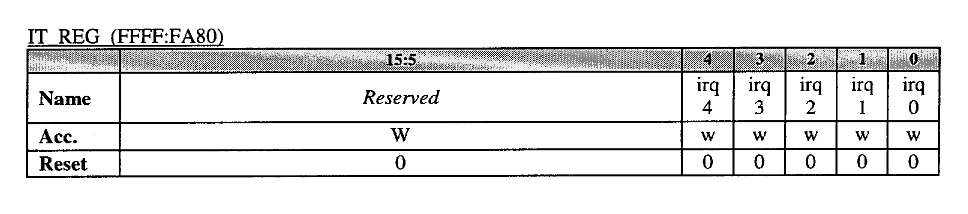

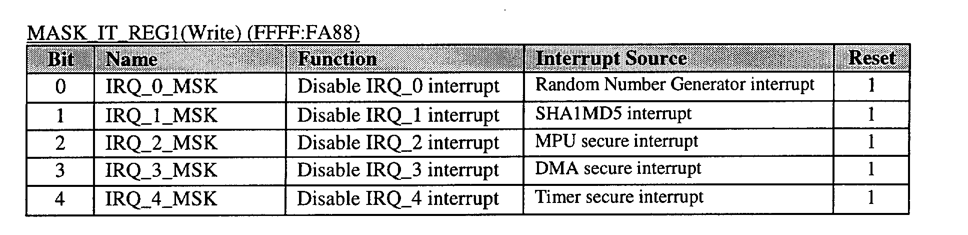

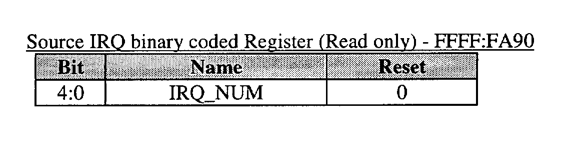

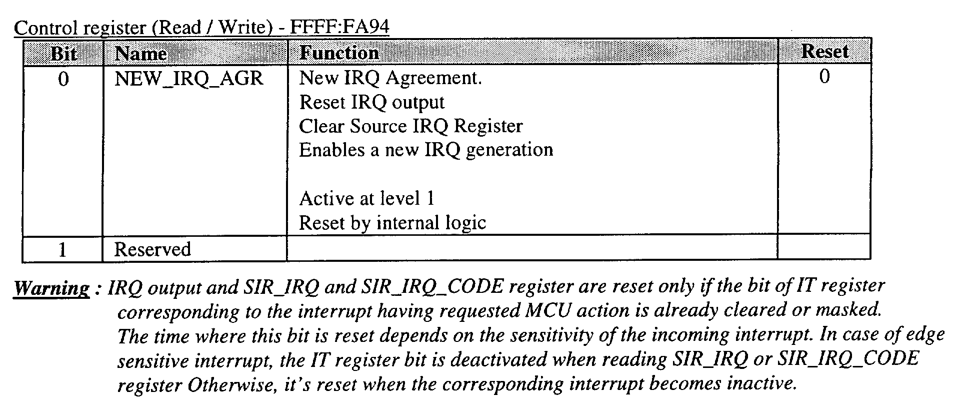

There is one ILR per incoming interrupt.

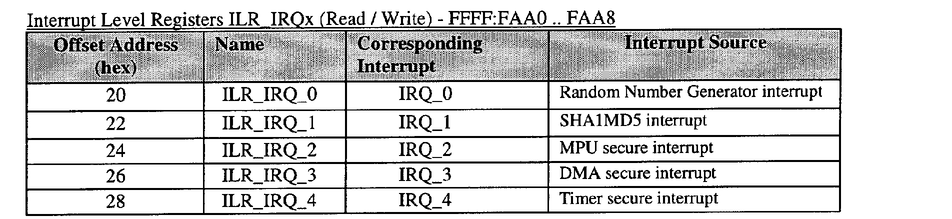

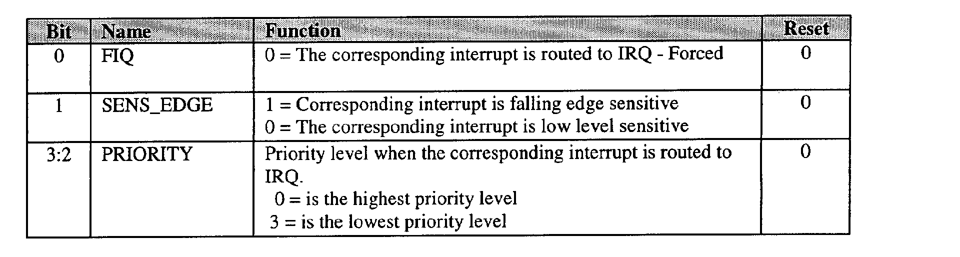

### Reset and Pinout

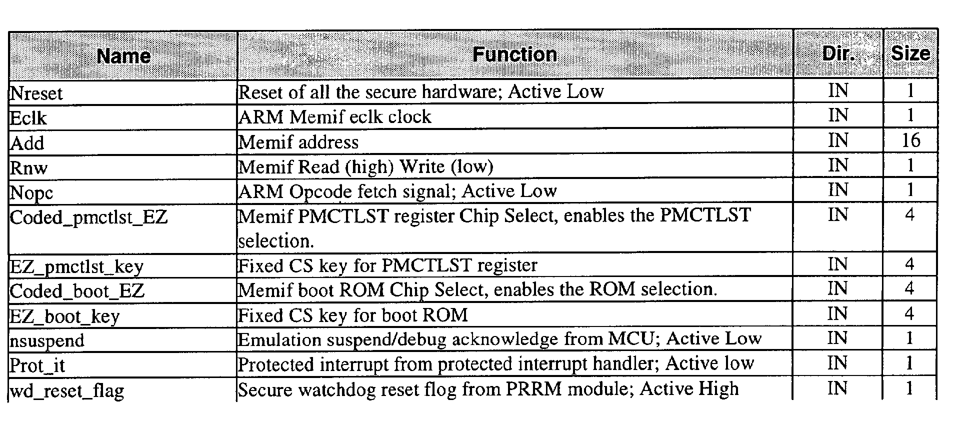

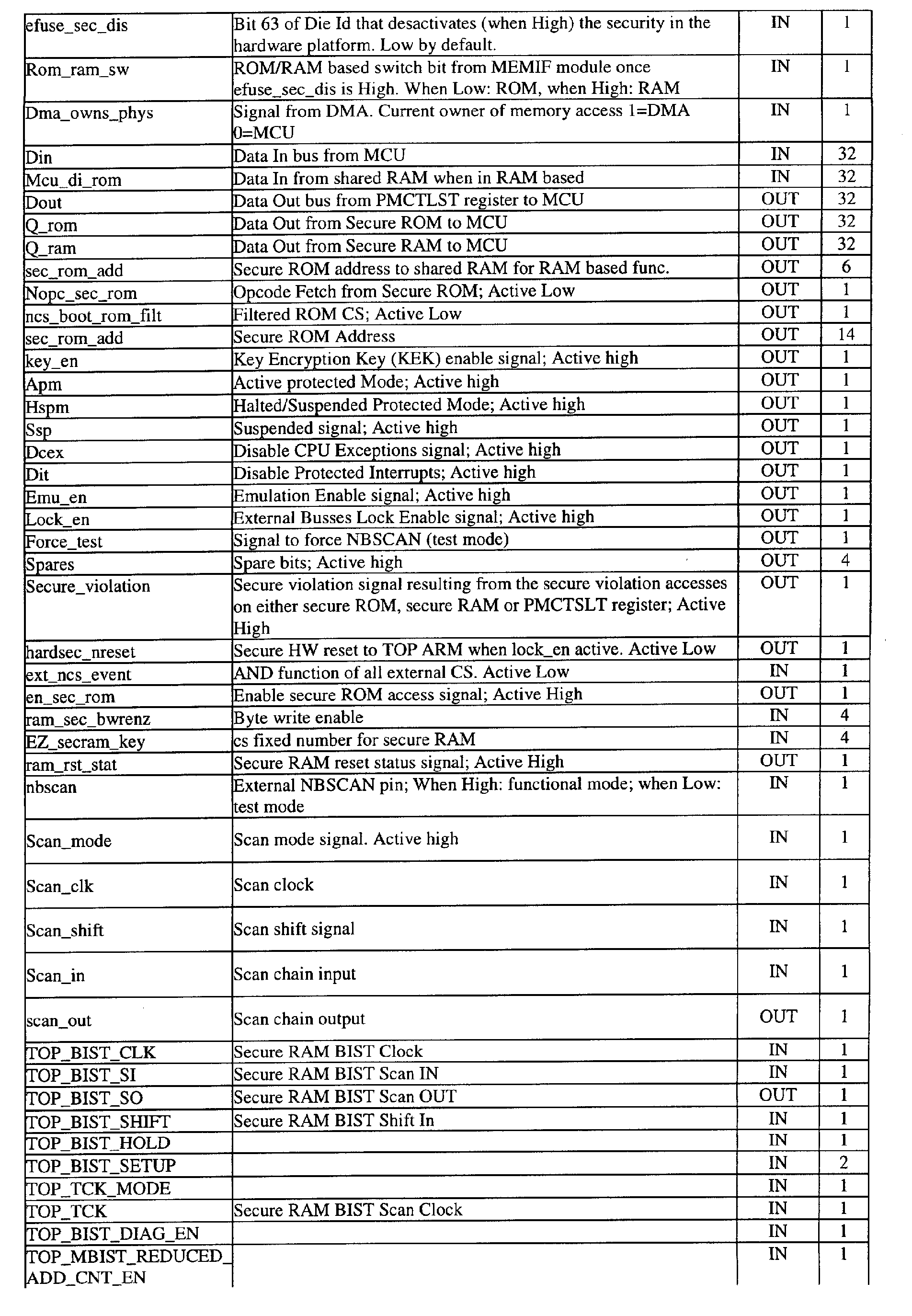

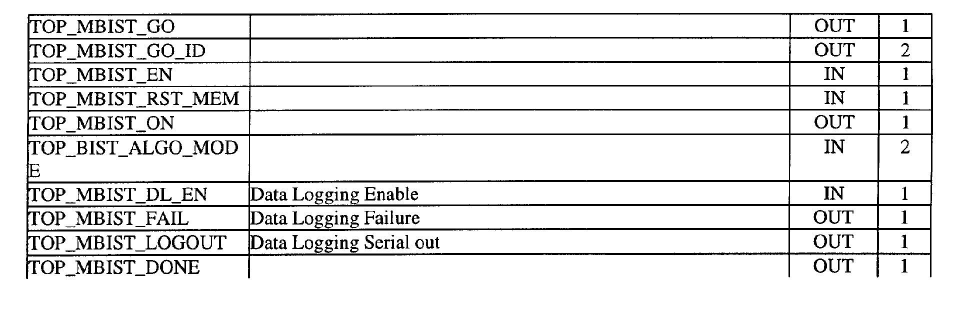

### Test Considerations

The tests production of the secure_hardware module will be performed through the scan test method, BIST as well as functional tests. The PMCTLST register module implements a scan capability.
Test mode is available when nbscan is set Low.
SCAN of PMCTLST register
All bits of PMCTLST except Key_en are scanned. The EMU_EN bit is scanned because when in scan mode, nbscan is Low and the MCU is reseted. Even if a code is loaded for execution, the MCU cannot execute it. The scan entry and exit process reset the PMCTLST register.
Functional Tests
The ROM content is checked via software CRC that is coded into the Secure-ROM. The Key_en bit of the PMCTLST register is tested with a ROM embedded functional test as well as the at speed accesses between the ROM and the secure RAM.
When nbscan is Low, address of the ROM is forced to the test entry mode at 0x20. DCEX bit that usually disables the IRQ, FIQ, Abort of the MCU when in functional is forced Low when in test mode. This allows generated interrupts in test mode to be addressed.
Secure RAM BIST
The secure RAM is tested via Logic Vision BIST methodology.

This portion of the document describes requirements for a Secure Boot Loader, Secure Reset Boot Checker and Secure Run-Time Loader for an embedded security solution that will implement fundamental mechanisms to ensure the running of a secure application.

### Acronyms and Definitions

| | |
|---|---|
| **DES** | Data Encryption Standard |
| **DSA** | Digital Signature Algorithm |
| **KEK** | Key Encryption Key |
| **OS** | Operating System |
| **RSA** | Rivest, Shamir, Adleman |
| **SHA-1** | Secure Hash Algorithm |

### Symmetric-Key Cryptography (also known as secret-key cryptography):

The same key is used both for encryption and decryption of information. DES is an example of a symmetric-key cryptosystem.

### One-way Hash Functions:

A one-way hash function takes variable-length input and produces a fixed-length output, known as a *message digest*, or simply *hash*. The hash function ensures that, if the information is changed in any way, an entirely different output value is produced. Hash algorithms are typically used in verifying the integrity of data. SHA-1 is an example of one-way hash function.

### Public Key Cryptography (also known as asymmetric cryptography):

Public key cryptography is an asymmetric scheme that uses a pair of keys for encryption and decryption of information. A key generation algorithm produces a public key and a private key. Classically, when sending information from point A to point B, information is encrypted by A using B's public key and then decrypted using B's private key. It is computationally infeasible to deduce the private key from the public key. The primary benefit of public key cryptography is that it allows people or entities that have no preexisting security arrangement to exchange messages securely. The need for sender and receiver to share secret keys via some secure channel is eliminated. RSA is an example of a public key cryptosystem.

### Digital Signatures:

A digital signature enables the recipient of information to verify the authenticity of the information's origin, and also verify that the information is intact. Typically, the sender signs a message by computing its hash and encrypting the hash with its private key. The recipient verifies the signature on the message by decrypting it with sender's public key (thus obtaining the transmitted hash), computing the hash of the received message, and comparing the two. Thus, public key digital signatures provide *authentication* and data *integrity.* A digital signature also provides *non-repudiation,* which means that it prevents the sender from claiming that he or she did not actually send the information. DSA is an example of a digital signature cryptosystem.

### Digital Certificates (also known as digital ID):

One issue with public key cryptosystems is that users must be constantly vigilant to ensure that they are encrypting or decrypting with the correct person's key, to be protected against *man-in-the-middle* attacks. A digital certificate is a form of digital *passport* or *credential* that simplifies the task of establishing whether a public key truly belongs to the purported owner. In its simplest form, a certificate is the user's public key that has been digitally signed by someone trusted, such as a *certificate authority*. A certificate can also contain additional information such as version number, user ID number, expiration date, etc.

### Firmware:

Legacy code delivered by the manufacturer and permanently resident on the platform.
The firmware is authenticated by the manufacturer's certificate.

### Software:

Generic code from any external source supposed to be downloaded on the platform on the field.

### Multi-layer Software Architecture for Security

The specification of a secure platform offering a secure programming environment to software developers must leverage multi-layer software architecture.

### The multi-layer concept adapted to security leads to the definition of 4 main layers, namely:

The Boot and Control layer, which manages the secure configuration of the platform.
The Secure Manager, which manages the access to the secure resources, such as cryptographic processors and secure memory.
The Operating System layer, which manages the function calls.
The Application layer which manages the unprivileged user application.
The multi-layer software architecture is based on the principle of ascending security with the security of a layer propagating its security privileges to the upper layer. In other words, a layer can only trust the underlying layer. Consequently, any tampering of a layer jeopardizes the security of the upper layers.

This hierarchical dependence of the software layers means that the secure and correct execution of the Application layer depends on the correct and secure execution of the Operating System layer which in turn depends on the Secure Manager layer which in turn depends on the Boot and Control layer.

The hierarchy in the authority tree implies the concept of dominance: the authority over the Boot and Control layer dominates the authority over the Secure Manager layer, which dominates the OS layer authorities. The authority over a particular OS dominates the authorities over all Applications for that OS.

Thanks to the hierarchical software architecture, it is possible to build a secure boot phase starting from the highest level of security and proceeding to the lowest. Each level authorizes the installation or update of the upper one and transfers to this next level a part of its own rights.

The responsibility of a platform vendor must be limited to the correct implementation of the hardware and resident software resources claimed to support security applications on the platform. Typically, a platform vendor will not guarantee the security level of applications running on the platform. Consequently, the secure capability of the platform must be restricted to the hardware and software necessary for implementing a secure operating environment and must not encompass the secure environment itself.

Based on this postulate, the definition of the ROM content will be limited to basic security functions that are responsible for creating a trusted environment where applications requiring security can execute. These functions include a Secure Manager, a Secure Boot Loader, a Secure Reset Boot Checker, a Secure Run-Time Loader, and the cryptographic modules used in these functions. Thus, all customers related software like a Flash Programmer will not be resident on the platform, but downloaded, transferring the responsibility of its subsequent secure operation to the customer. This document defines the Secure Boot Loader, the Secure Reset Boot Checker and the Secure Run-Time Loader functions.

An elementary rule to consider when implementing a secure system is that the security is inferred from the keys and not from the algorithms or protocols. To prevent any tampering of a device leading to threatening the integrity of other devices, a device must not store in a permanent way any secret key, shared or private, which are not exclusive to the device itself. Consequently, keys that are not specific to the platform will not be part of the ROM code but generated subsequently. This includes the IC manufacturer's and the phone manufacturers' private or shared keys.

### Operating Modes

### Secure Boot

The Boot and Control layer is the foundation of the security of the software architecture. The corresponding program code, hereafter called the Secure Boot, must have the highest resistance to adversary attacks. The necessary level of robustness will be offered with a ROM based approach.

### Remark:

*The Secure Boot software is stored in an on-chip ROM to protect it from alteration or modification of execution flows and not to protect the boot program code confidentiality*.

The goal of this software is to:
Guarantee the authenticity and integrity of the downloaded Flash Programmer program code before its execution, thanks to the Secure Boot Loader program
Guarantee the authenticity and integrity of the first layer of the firmware stored in external NoVo memory (typically Flash) before its execution, thanks to the Secure Reset Boot Checker

It takes the control of the system activity upon any type of reset (system reset, power-on reset, watchdog reset). It cannot be interrupted or bypassed by any means until the completion of its execution.

The Secure Boot is dependent of the hardware platform but independent of the Operating System running on this platform.

The downloading through a UART interface of the manufacturer's Flash Programmer firmware is assumed being activated from the system reset and power-on reset. When synchronization is detected on the UART physical bus, the Secure Boot Loader is launched. After a time-out when no activity has been detected on the UART physical bus, or after a watchdog reset, the Secure Reset Boot Checker is launched.

### Secure Boot Loader

The Secure Boot Loader process is executed in 3 steps:
Flash Programmer Download
Flash Programmer Authentication and Integrity Checking
Flash Programming

### Flash Programmer Download

The code of the Flash Programmer Download is executed from the ROM with all interrupts masked to ensure the proper activation of this Secure Boot Loader function. As stated before, the on-chip ROM code must be generic and not contain any equipment manufacturer specific parameters. However, two global parameters must be set-up to authorize the execution of the hierarchical boot loading sequence:
- ***@flash_store*** base address for Platform Firmware Certificate storage in external NoVo memory
- ***@flash_load*** base address for loading the Flash Programmer code in internal memory

The Flash Programmer Download part of the Secure Boot Loader will be restricted to the downloading on the platform of the Manufacturer's Flash Programmer firmware. All subsequent downloading of firmware on the platform will be handled by the manufacturer's Flash Programmer program itself and under its entire responsibility.

### Flash Programmer Authentication and Integrity Checking

The downloading of the Flash Programmer will proceed with the Flash Programmer firmware authentication and integrity checking with the following steps, which are detailed in subsequent chapters of this document:
1. Manufacturer public key ***MAN_PUB_KEY*** authentication from on-chip eFuse stored hashed value
2. Manufacturer's Flash Programmer firmware certificate authentication and content integrity checking using ***MAN_PUB_KEY***
3. Authentication of firmware originator Public Key ***ORIG_PUB_KEY***
4. Firmware signature authentication and code integrity checking using ***ORIG_PUB_KEY***
5. Start Flash Programmer firmware code execution from internal RAM

### Remark:

The procedure is identical for a Flash first download or for a Flash upgrade.

### Flash Programming

The manufacturer Flash Programmer is downloaded in the internal RAM by the Flash Programmer Download program.
The Flash Programmer is under the phone manufacturer's responsibility and shouldn't be resident on the platform. Moreover, flexibility is required to address any physical means (interface port) favored by the phone manufacturer to download the main platform program code.

The Flash Programmer is dependent on the platform but independent of the Operating System.

### Remark:

Address management is crucial to the security of the system. A Secure Application should never be programmed (stored) in place of the system boot firmware code. The system boot firmware certificate always starts from a predetermined address in Flash, which is hard-coded into ROM. The system boot firmware certificate will contain a field specifying the size of the code and the address where is stored the code. When invoked in Run-time programming mode, the Secure Run-Time Loader will compute the end address of code of the system boot firmware in order not allowing a Secure Application to overwrite this system firmware code.

### Secure Reset Boot Checker

The Secure Reset Boot Checker is on watchdog reset or after a time-out when no activity has been detected on the UART physical bus.
Based on the certificate of the lower layer of the firmware (the system boot firmware) and prior to any application processing, it authenticates and checks the integrity of the system boot part of the platform resident firmware downloaded in the NoVo Flash memory. The reset boot checker processing time is directly linked to the size of code of the system boot firmware. It is the responsibility of the system boot firmware code to authenticate and check the integrity of upper-layer code.

This checker will proceed with system boot firmware authentication and integrity checking with the following steps:
1. Manufacturer public key ***MAN_PUB_KEY*** authentication from on-chip eFuse stored hashed value
2. Manufacturer's system boot firmware certificate authentication and code integrity checking using ***MAN_PUB_KEY***
3. Authentication of firmware originator Public Key ***ORIG_PUB_KEY***
4. Firmware signature authentication and code integrity checking using ***ORIG_PUB_KEY***
5. Start firmware code execution

The Reset Secure Boot Checker can be called each time an integrity check of the software is desired to prevent any dynamic alteration attempt:
- On a periodical basis (e.g. on secure watchdog reset activation).
- Upon user reset request

### Secure Boot Flow Chart

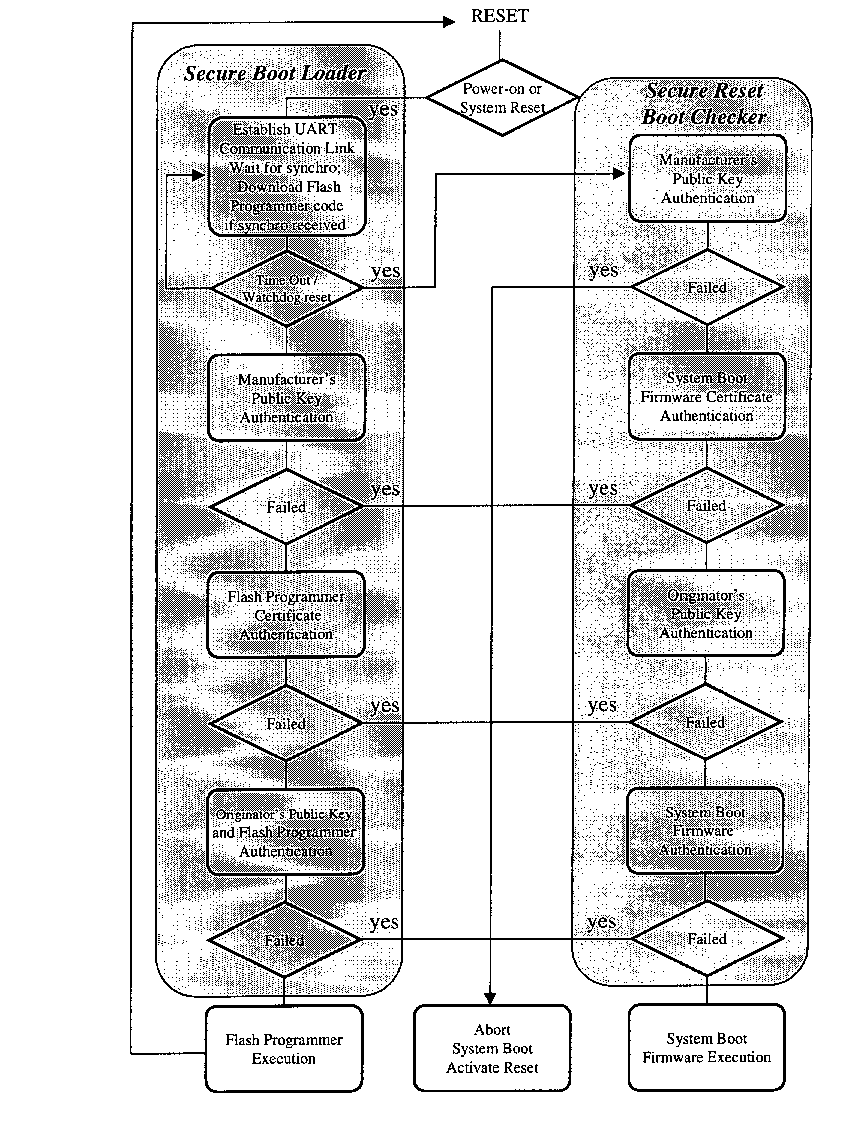

### Secure Run-time Loading and Checking

The Secure Run-time Loader handles the binding of a software module (code and/or data) to the platform with the creation of a specific certificate, called a platform certificate, allowing its further authentication and integrity checking. The binding mechanism helps to uncover any modification of the original software module, and prevents any copy of the source from running on another similar platform, thus offering an efficient protection against cloning attacks, specifically important for copyright and media protection. The software module can be optionally encrypted to preserve its confidentiality when stored in an external NonVolatile memory.

The Run-time Loading of the software module follows the processing sequence:
1. Creation of the certificate
   1.1. Generation of the software encryption key ***SW_SYM_KEY*** from RNG output
   1.2. Encryption of the software encryption key with ***KEK***
   1.3. Signature of the certificate from encryption with the software encryption key ***SW_SYM_KEY*** of the hashing of certificate fields
2. Encryption of the software module with the software encryption key ***SW_SYM_KEY*** (optional).
3. Storage of the [encrypted] software module and its certificate in external NoVo memory (typically Nand or Nor Flash).

The Secure Run-time Loader supports the converse processing for the authentication of the module, the checking of its integrity and, optionally, its decryption after storage in internal RAM memory.

The Run-time Checking of a software module follows the processing sequence:
1. Authentication and integrity checking of software module
   1.1. Decryption of the software encryption key ***SW_SYM_KEY*** with ***KEK***
   1.2. Checking of certificate signature with ***SW_SYM_KEK***
2. Loading of encrypted module into internal RAM memory for further decryption and execution (optional).
Decryption of software module in internal RAM memory with the software encryption key
***SW_SYM_KEY*** (optional)

### Software Authentication principle

The foundation of a secure computing platform is the authentication of the software installed on the platform. The authentication process must guarantee the origin and the integrity of the software stored in the external NoVo memory. It prevents code from being modified by unauthorized entities or the external memory NoVo from being swapped. It also prevents the execution of any forged or spoofed software code.

The authentication of a software module is based on a certificate associated with this module. This certificate allows mainly authenticating the software module versus a reference and checking the code integrity. Additionally, configuration parameters can be included to offer the necessary flexibility for supporting different operating scenarios with a generic Secure Authentication routine.

The certification must be based either on the trusted originator of the firmware module (the manufacturer or a trusted 3^{rd} party), or on the hardware platform itself (binding concept) when the software module is already certified by a software of an upper security layer.

When the certificate is based on a trusted originator, such as the Flash Programmer and Secure Boot Firmware ones, it is called the Manufacturer certificate.When the certificate is based on the hardware platform itself, it is called the Platform certificate.

### Certificates description

### Manufacturer Certificate

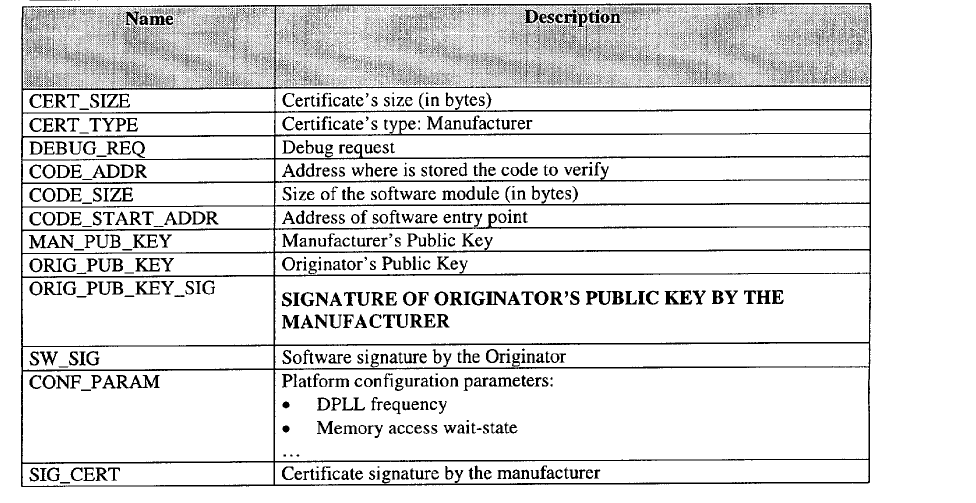

The digital manufacturer certificate is composed of the following fields:
- The certificate size in bytes *(****CERT_SIZE****)*
- The certificate type *(****CERT_TYPE****)*, signaling a Manufacturer based authentication (using PKI asymmetrical encryption and on-chip MAN_PUB_KEY)
- The debug request *(****DEBUG_REQUEST****)*
   *Remark:*
   *This field is particularly important since it allows, in a secure manner, to enable and disable the emulation on a trusted device. The manufacturer is the sole entity able to set and unset this field since it is signing the certificate with its private key (MAN_PRI_KEY). Any tentative attack to change this field by any other party than the manufacturer will be detected during certificate authentication and integrity checking.*
- The address where is stored the code to verify *(****CODE_ADDR****)*
- The code size in bytes *(****CODE_SIZE****)*
- The address of the software entry point *(****CODE_START_ADDR****)*
- The manufacturer's public key *(****MAN_PUB_KEY****)*
- The originator's public key *(****ORIG_PUB_KEY****)*
- The signature of the originator public key by the manufacturer *(****ORIG_PUB_KEY_SIG****)*
- The signature of the software *(****SW_SIG****)*, generated by the trusted originator of the software module (the manufacturer or a trusted 3^{rd} party), off-platform, thanks to asymmetrical digital signature
- Platform configuration parameters *(****CONF_PARAM****)*, such as:
   o DPLL frequencies
   o Memory access wait-state
   o ...
- The certificate signature (**SIG_CERT**), generated by the manufacturer, off-platform, thanks to asymmetrical digital signature

### Platform Certificate

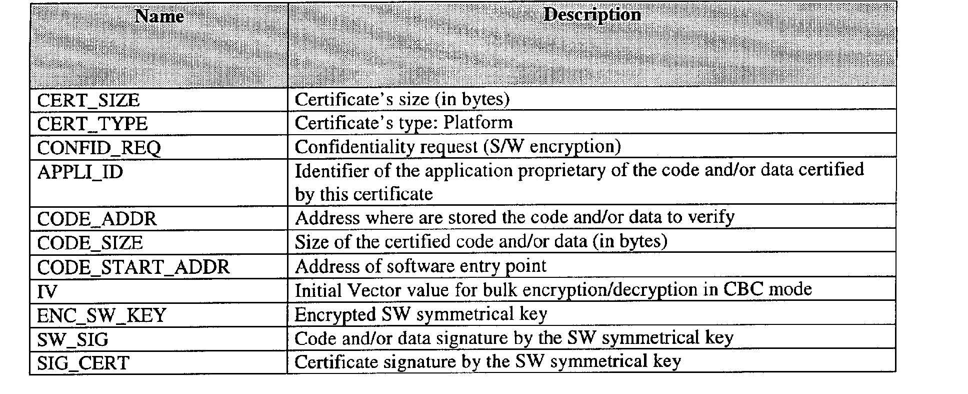

The digital platform certificate is composed of the following fields:
- The certificate size in bytes *(****CERT_SIZE****)*
- The certificate type *(****CERT_TYPE***), signaling a platform based authentication (using symmetrical DES encryption and device KEK key)
- The confidentiality request (encryption before storage in external Flash memory) *(****CONFID_REQ****)*
- The identifier of the application which is proprietary of the code and/or data certified *(****APPLI_ID****)*
   *Remark:*
   *This field, the value of which is checked during unbinding process, will prevent a rogue application to unbind and read data and*/*or code, which belong to another application. It can be efficiently used by the Secure Manager, which manages the access to the secure resources, to implement a secure access control of sensitive information (code or data).*
- The address where are stored the code and/or data to verify (***CODE_ADDR***)
- The size of the certified code and/or data in bytes (***CODE_SIZE***)
- The address of the software entry point (***CODE_START_ADDR***)
- The initial vector value for bulk symmetrical encryption/decryption in CBC mode (***IV***)
- The encryption with KEK of the symmetrical software encryption key (***ENC_SW_KEY***)
- The code and/or data signature (***SW_SIG***), generated by the hardware platform itself, on-platform, thanks to symmetrical digital signature (binding concept)
- The certificate signature (***SIG_CERT***), generated by the hardware platform itself, on-platform, thanks to symmetrical digital signature (binding concept)

### Keys types description

### Manufacturer's Keys

The manufacturer needs to own a unique asymmetric key pair, generated by a PKI crypto-system, to authenticate any firmware downloaded on the platform.
These keys are named as follows:
- ***MAN_PUB_KEY*** is the manufacturer's asymmetric public key.
- ***MAN_PRI_KEY*** is the manufacturer's asymmetric private key.

The manufacturer must ensure that the ***MAN_PRI_KEY*** remains secret and is not compromised. The disclosure of this key by 3^{rd} parties could jeopardize the whole security of the device.

The ***MAN_PUB_KEY*** is constituted of the concatenation of a modulus value, the size of the modulus in bytes and a public exponent value, which need to be stored on the device. In order to reduce the size of the eFuse based NoVo array dedicated to the storage of the manufacturer's public key related information, the hash of this key (128 least significant bits of the SHA-1 MAN_PUB_KEY hashing result) is stored rather than the key itself.

The external storage conditions and the management of ***MAN_PRI_KEY*** are out of the scope of this document and a secure process flow must be defined.

### Remarks:

- *The manufacturer can generate a specific asymmetric key pair for each family of devices.*
- *The manufacturer can adjust the modulus size of its public key according to its security level requirement.*

### Firmware Oripinator's Keys

The firmware originator needs to own a unique asymmetric key pair, generated by a PKI crypto-system, to authenticate any firmware downloaded on the platform.
These keys are named as follows:
- ***ORI_PUB_KEY*** is the firmware originator's asymmetric public key.
- ***ORI_PRI_KEY*** is the firmware originator's asymmetric private key.

The firmware originator must ensure that the ***ORI_PRI_KEY*** remains secret and is not compromised. The disclosure of this key by 3^{rd} parties could jeopardize the whole security of the device.

### Device Key

The ***KEK*** is a value generated from a random seed (Random Number Generator output) during device production and stored on-chip in an eFuse array. The **KEK** is **only** used to encrypt or decrypt the Software Encryption Key. The KEK length will be chosen according to the bulk encryption algorithm available: e.g. 64 bits (56 active bits) for DES, 128 bits (112 active bits) for 3DES with 2 keys or AES, etc.

### Software Encryption Key

A symmetrical key (secret key with a typical length of 128 bits), ***SW_KEY*** can be associated to a software module for its encryption when stored in external memory devices.
This symmetrical key is generated from a random value seeded by a RNG.
This key will be itself encrypted by the device key called ***KEK*** to allow its storage in external memory devices.

### Description of the Security functions

The Secure Operating Modes previously defined are supported by specific routines stored in the Secure Boot ROM.

### Manufacturer's Public Key Authentication

To guarantee the authenticity of a software module, its originator must sign the firmware code with the private key ***ORIG_PRI_KEY*** of its asymmetrical key pair.
The resulting firmware signature is then incorporated with additional information, among which the originator public key ***ORIG_PUB_KEY*** and the manufacturer asymmetrical public key ***MAN_PUB_KEY*,** in a certificate signed itself by the private key ***MAN_PRI_KEY*** of the manufacturer asymmetrical key pair. Thus the manufacturer certifies the identity of the originator of the software code.

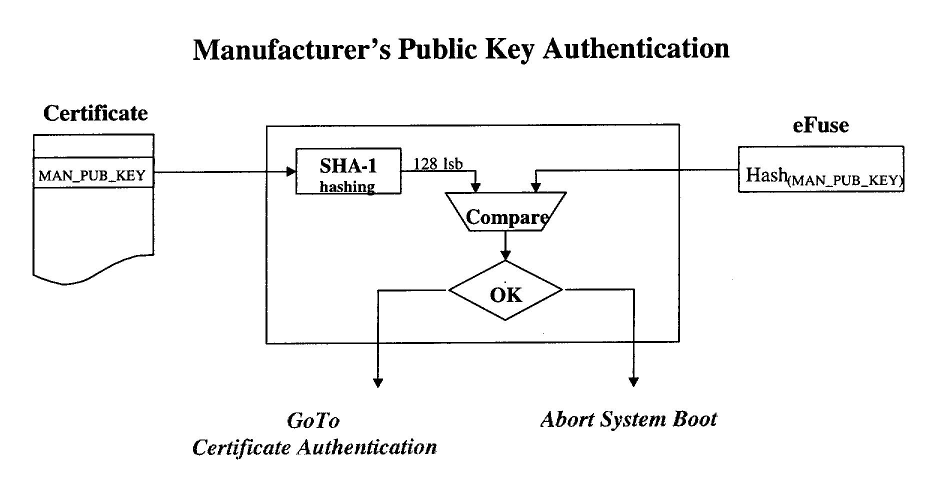

The sequence for authentication of the manufacturer's public key stored in the certificate is:
- Compute the hash of the received manufacturer's public key ***MAN_PUB_KEY*** retrieved from the certificate
- Compare computed hash value with the eFuse stored value ***hash(MAN_PUB_KEY)***_{***FUSE***}**.**
- If the hash values are identical, then proceed with the verification of the certificate of the firmware, otherwise abort the secure loading process and, if this is a boot operation, place the device in reset state.

### Firmware Certificate Authentication

The certificate can be authenticated from its signature. Using the authenticated manufacturer's public key ***MAN_PUB_KEY***, the certificate signature, originally asymmetrically encrypted with the manufacturer's private key ***MAN_PRI_KEY*,** can be decrypted and the resulting hash value compared to the computed hash of the certificate data fields.

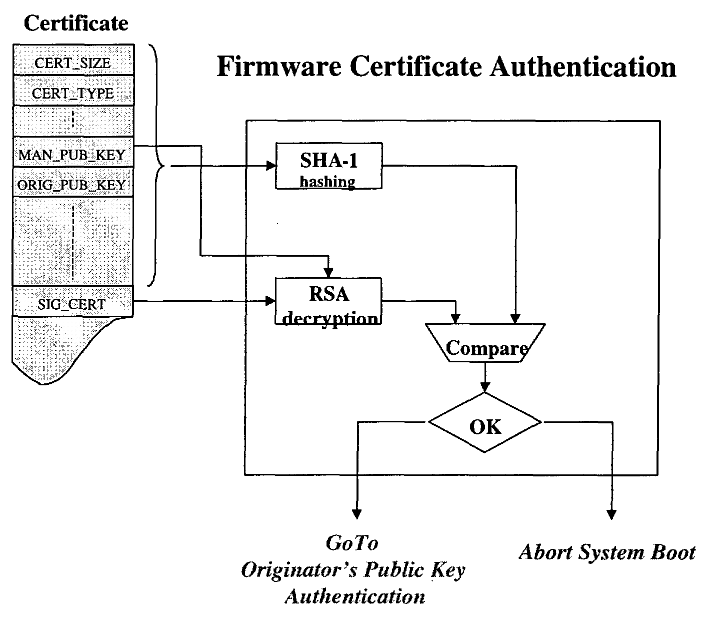

The sequence of processing for firmware certificate authentication is:
- Decrypt certificate signature ***SIG_CERT*** with manufacturer's public key ***MAN_PUB_KEY***
- Compute hash of certificate data fields
- Compare computed hash value with signature hash value
- If the hash values are identical, then proceed with the authentication of the originator's public key enclosed in the certificate, otherwise abort the secure loading process and, if this is a boot operation, place the device in reset state.

### Originator's Public Key Authentication

The firmware originator signs the firmware code with the ***ORIG_PRI_KEY*** private key of its asymmetrical key pair.
To allow the subsequent authentication of the firmware from its signature, the public part ***ORIG_PUB_KEY*** of the originator's key pair enclosed in the firmware certificate must be authenticated. This key is authenticated from its signature with the manufacturer's private key ***MAN_PRI_KEY***.

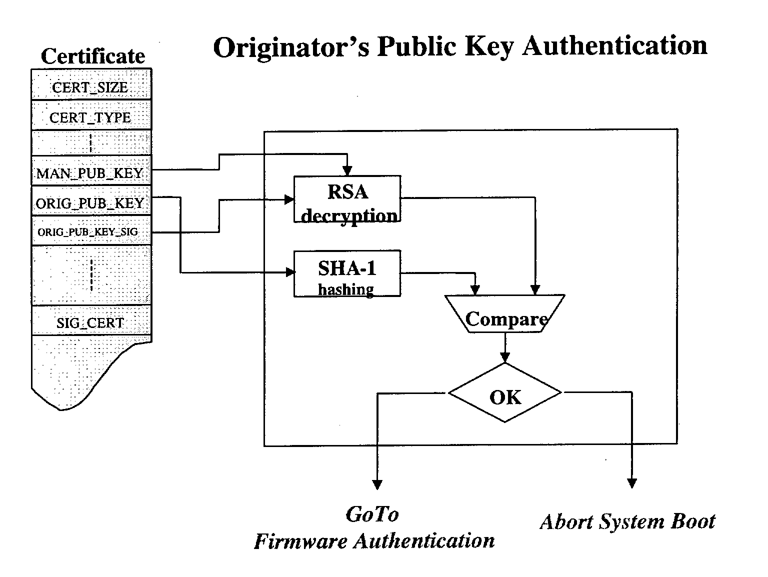

The sequence of processing for originator's public key authentication is:
- Compute the hash of the received originator's public key ***ORIG_PUB_KEY*** retrieved from the certificate
- Decrypt public key signature ***ORIG_PUB_KEY_SIG*** with manufacturer's public key ***MAN_PUB_KEY***
- If the hash values are identical, then proceed with the firmware authentication, otherwise abort the secure loading process and, if this is a boot operation, place the device in reset state

### Firmware Authentication

The firmware is authenticated from its signature certified with the originator's private key ***ORIG_PRI_KEY*.**

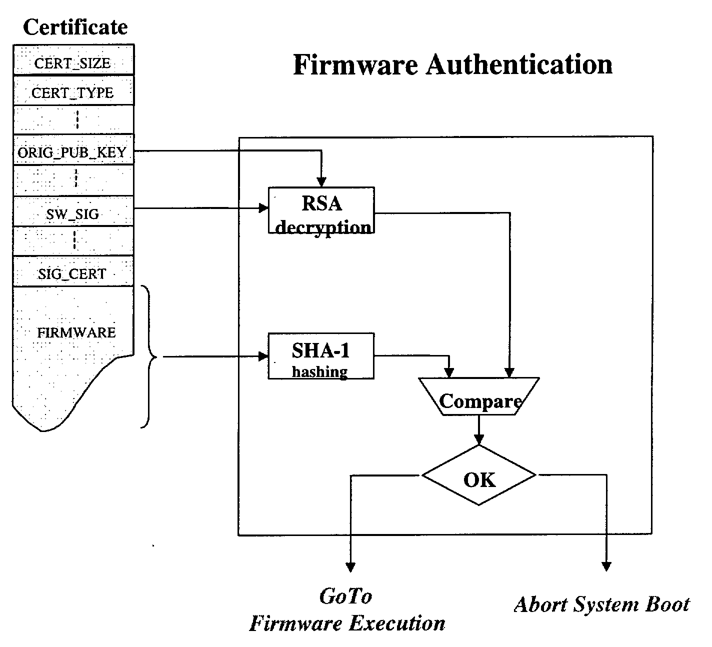

The sequence of processing for certificate authentication is:
- Decrypt firmware signature ***SW_SIG*** with originator's public key ***ORI_PUB_KEY***
- Compute the hash of the firmware code
- If the hash values are identical, then proceed with the execution of the firmware code, otherwise abort the secure loading process and, if this is a boot operation, place the device in reset state

### Software Binding & Encryption

The binding of the software to the platform will use a symmetrical encryption key called the Key Encryption Key (***KEK***) specific to the IC device and stored on-chip in a non-volatile eFuse array.
For reducing the risk of disclosure of the ***KEK*** through a reverse engineering of the encrypted code, it was decided to generate randomly a specific symmetrical encryption key ***SW_KEY*** for each software code requiring binding. The symmetrical encryption key ***SW_KEY*** will be used to sign the software code hash value using a 3-DES symmetrical cryptographic algorithm. The binding process relies on the encryption of the latter key with the ***KEK*** for its external storage.

This process helps to uncover any modification of the original software code, and prevents any copy of the source code from running on another similar platform.

It may also be desirable to preserve the confidentiality of the firmware object code downloaded on the platform. For this purpose, this code must be stored in the external memory in encrypted form and decrypted before execution during boot or run-time loading for its execution in the internal memory. Encryption will be performed with a 3-DES symmetrical cryptographic algorithm for computing efficiency, using the symmetrical encryption key ***SW_KEY***.

### Remark:

The KEK must be dedicated to the sole symmetrical DES crypto-processor and its use restricted to the encryption and decryption of keys.

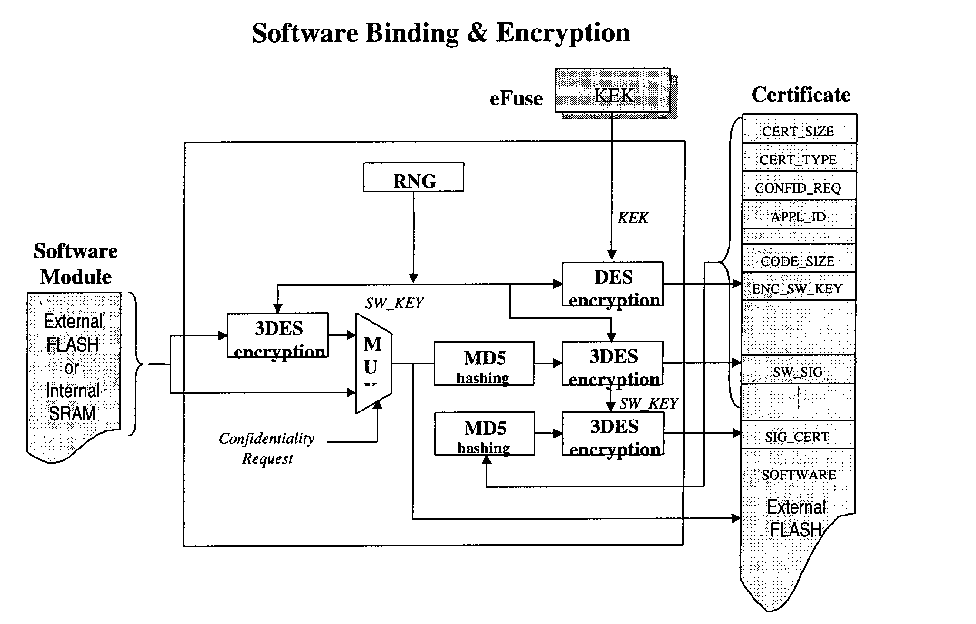

When binding a piece of software code, the binding program must receive as input parameters:
- ***CONFID_REQ*** request for source code encryption
- ***CERT_TYPE*** software binding versus platform
- ***CODE_SIZE*** size in bytes of software code
- ****@store_cert*** pointer to storage address in external memory of binding certificate and [encrypted] software code
- ****@store_code*** pointer to storage address in external memory of [encrypted] software code
- ****@source_code*** pointer to location address of original firmware code in internal RAM memory

The sequence of processing is:
- Create a symmetrical key ***SW_KEY*** (16 bytes) from on-chip RNG
- If code confidentiality has been requested during download *(****CONFID_REQ*** parameter is set), the software code must be encrypted before signature and storage.
   o Encrypt (3-DES) software code with ***SW_KEK***
   K1=SW_KEY[63:0], K2=SW_KEY[127:64] , K3=K1
- Encrypt (DES) software encryption key ***SW_KEY*** with ***KEK***
- Create signature of software code [encrypted] image with encryption (3-DES) of hashing results by ***SW_KEK***
- Create certificate and store in external memory at address ***@store_cert***
- Store software code [encrypted] image in external memory at address ***@store_code***

### Software Unbinding & Decryption

Before executing a software in plain code, the authenticity and the code integrity must be checked thanks to the associated certificate.
The unbinding of the software will require at first to check the signature of the firmware stored in the external memory by retrieving the software encryption key, then, if confidentially parameter is set, to decrypt the code.
The decryption process and the storage of the plain code must be in internal RAM.

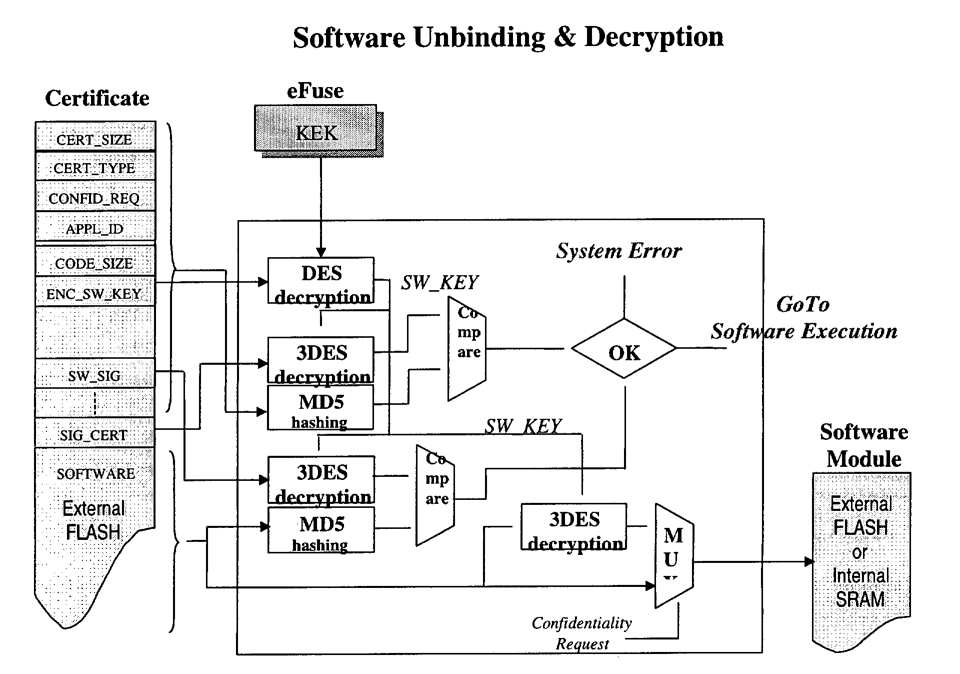

When unbinding a piece of software code, the unbinding program must receive as input parameters:
- ***CERT_TYPE*** software binding versus platform
- ****@source_cert*** pointer to location address of binding certificate in external memory
- ****@load_code*** pointer to location address in internal memory where to load the plain code
- ***APPL_ID_input*** the identifier of the application calling the unbinding process

The sequence of processing is:
- Read certificate type ***CERT_TYPE***
- Read confidentiality request parameter ***CONFID_REQ***
- Read address where are stored the code and/or data to verify in external memory ***CODE_ADDR***
- Read software code size ***CODE_SIZE***
- Decrypt with KEK the symmetrical key ***SW_KEY*** (16 bytes) stored in certificate
- Read the ***IV*** parameter for symmetrical decryption operation initialization with SW_KEY
- Authenticate certificate signature with comparison between decrypted signature value with ***SW_KEY*** and computed hash value of certificate fields
- Compare the ***APPL_ID*** parameter of the certificate with ***APPL_ID_input***
- If code confidentiality is set (***CONFID_REQ*** parameter in certificate), the software code must be decrypted after storage in internal **RAM**
   o Read software code [encrypted] image in external memory at address ***CODE_ADDR***
   o Load the software encrypted code in internal RAM at address ***@load_code***
   o Decrypt (3-DES) software code in internal RAM with ***SW_KEY*** K1=SW_KEY[63:0] , K2=SW_KEY[127:64], K3=K1

## Claims

1. A digital system comprising:
a hardware platform; and
a means for periodically checking the firmware integrity and authenticity during application run time, thus detecting any dynamic alteration of the external memory content.

2. The digital system of Claim 1, further comprising means for binding the software module (code and data) to the hardware platform with the creation of a specific certificate, called a platform certificate, allowing its further authentication and integrity checking.

3. The digital system of any preceding claim, wherein the hardware platform is formed on a single integrated chip, further comprising means for generating a unique Key Encryption Key (KEK) located on-chip.

4. The digital system according to any preceding claim, further comprising means to identify a requester before entering a specific mode of the device (i.e:Test, Emulation...) without storing on-chip the corresponding requester's identity code.

5. The digital system according to any preceding claim, wherein a firmware code module controls operation of the hardware platform, further comprising means to create a certificate for the firmware code, signed by the trusted originator's asymmetrical private key of the firmware module (called MAN_PRI_KEY), the certificate containing information about the code it authenticates (size, storage address in memory, start address, signature), the public key of the trusted originator (called MAN_PUB_KEY), and also the platform configuration parameters to control clock frequency, memory accesses, test and emulation.
